(19) Europäisches Patentamt
European Patent Office
Office européen des brevets

(11) **EP 3 433 669 B1**

(12) **EUROPÄISCHE PATENTSCHRIFT**

(45) Veröffentlichungstag und Bekanntmachung des Hinweises auf die Patenterteilung:
**10.09.2025 Patentblatt 2025/37**

(21) Anmeldenummer: **17713578.7**

(22) Anmeldetag: **14.03.2017**

(51) Internationale Patentklassifikation (IPC):
**G02C 13/00** (2006.01)    **G01B 11/25** (2006.01)

(52) Gemeinsame Patentklassifikation (CPC):
**G02C 13/003; G01B 11/2513; G02C 13/005; G06T 7/521;** G06T 2207/30201

(86) Internationale Anmeldenummer:
**PCT/EP2017/000336**

(87) Internationale Veröffentlichungsnummer:
**WO 2017/162329 (28.09.2017 Gazette 2017/39)**

(54) **VERFAHREN UND VORRICHTUNG ZUR ERMITTLUNG VON 3D-KOORDINATEN ZUMINDEST EINES VORBESTIMMTEN PUNKTES EINES OBJEKTS**

METHOD AND DEVICE FOR THE DETERMINATION OF 3D-COORDINATES OF AT LEAST ONE PREDETERMINED POINT OF AN OBJECT

PROCEDURE ET DISPOSITIF POUR LA DETERMINATION DES COORDONNEES 3D D'UN POINT DETERMINE D'UN OBJET

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.03.2016 DE 102016003512**

(43) Veröffentlichungstag der Anmeldung:
**30.01.2019 Patentblatt 2019/05**

(73) Patentinhaber: **Rodenstock GmbH**
**80687 München (DE)**

(72) Erfinder: **SEITZ, Peter**
**71272 Renningen (DE)**

(74) Vertreter: **Müller-Boré & Partner**
**Patentanwälte PartG mbB**
**Friedenheimer Brücke 21**
**80639 München (DE)**

(56) Entgegenhaltungen:
DE-A1- 102005 003 699    US-A1- 2012 133 954
US-A1- 2015 204 663

• JASON GENG: "Structured-light 3D surface imaging: a tutorial", ADVANCES IN OPTICS AND PHOTONICS, vol. 3, no. 2, 31 March 2011 (2011-03-31), pages 128, XP055033088, DOI: 10.1364/AOP.3.000128

**Beschreibung**

Die vorliegende Erfindung betrifft ein Verfahren und eine Vorrichtung zur Ermittlung von 3D-Koordinaten zumindest eines vorbestimmten Punktes eines Objekts sowie ein Computerprogrammprodukt zum Durchführen des Verfahrens.

Durch die Einführung von individuell optimierten Brillengläsern ist es möglich, auf die Ansprüche von Personen mit Sehfehlern einzugehen und beispielsweise Brillengläser mit individuell optimierten Sehbereichen bereitzustellen. Individuell angepasste Brillengläser ermöglichen eine optimale Korrektur von optischen Sehfehlern eines Benutzers der Brillengläser. Eine individuelle Berechnung und Anpassung von Brillengläsern ist auch für Sportbrillen möglich, welche sich durch große Durchbiegungen, Fassungsscheiben- und Vorneigungswinkel auszeichnen.

Um die optischen Vorteile von individuellen Brillengläsern, insbesondere von individuell angepassten Gleitsichtgläsern, vollständig auszuschöpfen, ist es notwendig, diese Brillengläser in Kenntnis der Gebrauchsstellung des Benutzers zu berechnen und herzustellen und gemäß der zur Berechnung und Herstellung verwendeten Gebrauchsstellung zu tragen. Die Gebrauchsstellung ist von einer Vielzahl von optischen Parametern abhängig, beispielsweise von der Pupillendistanz des Benutzers, dem Fassungsscheibenwinkel, der Brillenglasvorneigung der Brillenfassung, dem Hornhautscheitelabstand des Systems von Brille und Auge und der Einschleifhöhe der Brillengläser. Diese und weitere Parameter, welche zur Beschreibung der Gebrauchsstellung herangezogen werden können, bzw. notwendig sind, sind in einschlägigen Normen, wie beispielsweise der DIN EN ISO 1366, der DIN 58 208, der DIN EN ISO 8624 und der DIN 5340 enthalten und können diesen entnommen werden. Ferner ist es notwendig, dass die Brillengläser entsprechend den optischen Parametern, welche zur Herstellung verwendet wurden, in einer Brillenfassung angeordnet bzw. zentriert werden, so dass die Brillengläser tatsächlich entsprechend den optischen Parametern in Gebrauchsstellung getragen werden.

Zur Bestimmung der Lage eines Brillenglases vor dem Auge müssen mehrere der optischen Parameter bestimmt werden. Dadurch können einerseits die zum Einschleifen und Einsetzen in die Fassung benötigten Informationen erhalten werden, andererseits können damit Optimierungen im Brillenglas selbst vorgenommen werden, um es auf die Trageposition in Gebrauchsstellung anzupassen.

Zur Bestimmung solcher optischer Parameter ist z.B. aus der DE 10 2005 003 699 A1 eine Vorrichtung mit zwei Bildaufnahmevorrichtungen bekannt, die aus unterschiedlichen Aufnahmerichtungen jeweils ein Bild von einem Benutzer mit Brille aufnimmt, aus denen sie z.B. dreidimensionale (abgekürzt: 3D) Koordinaten vorbestimmter Punkte des Benutzers mit Brille errechnet. Aus diesen 3D-Koordinaten der vorbestimmten Punkte können die optischen Parameter bestimmt werden.

Aus Dokument US 2015/0204663 A1 ist ein 3D-Scanner bekannt, bei welchem eine Abfolge von Lichtmustern mit unterschiedlichen Lichtverteilungen auf ein Objekt projiziert wird. Objektpunkte an Übergängen zwischen hellen und dunklen Stellen des Lichtmusters werden detektiert.

Dokument US 2012/0133954 A1 betrifft eine Vorrichtung und ein Verfahren zum Projizieren von Lichtmustern auf ein Objekt. Dabei weist ein zweites Lichtmuster kleinere Abstände zwischen hellen und dunklen Stellen auf als ein erstes Lichtmuster. Ein drittes Lichtmuster ist komplementär zum zweiten Lichtmuster. Von jedem auf das Objekt projizierte Lichtmuster wird ein Bild aufgenommen. Die Objektpositionen an den Übergängen von Hell zu Dunkel im ersten Lichtmuster werden mit Hilfe der drei Bilder bestimmt.

Andere Vorrichtungen arbeiten mit zweidimensionalen Berechnungsverfahren, die anhand mehrerer Bilder die gewünschten optischen Parameter ermitteln. Zudem gibt es manuelle Bestimmungsmöglichkeiten, wie z.B. ein Pupillometer und ein Pupillenabstandslineal.

Bei diesen Messverfahren besteht eine Abhängigkeit von der messenden Person und der Durchführung der Messung. So kann z.B. anhand einer zweidimensionalen Aufnahme der individuelle Hornhautscheitelabstand bei der Bestimmung der Pupillendistanz nicht ermittelt werden, wodurch sich eine systematische, von Proband und Fassung abhängige Abweichung der Pupillendistanz ergibt.

Bei Verwendung eines stereoskopischen Kamerasystems zur Ermittlung der optischen Parameter eines Benutzers aus 3D-Koordinaten vorbestimmter Punkte tritt ein Korrespondenzproblem auf. Das Korrespondenzproblem betrifft ein Identifizieren von zueinander korrespondierenden Punkten in zwei aus unterschiedlichen Perspektiven aufgenommenen Aufnahmen. Erst nachdem zueinander korrespondierende Punkte in beiden Aufnahmen ermittelt worden sind, kann eine 3D-Rekonstruktion der Aufnahmepunkte erfolgen.

In der Praxis werden die korrespondierenden Punkte durch eine manuelle Auswertung der Aufnahmen ermittelt. Diese manuelle Auswertung erfordert einen erheblichen Zeitaufwand und ist durch die Nutzerabhängigkeit eine potentielle Fehlerquelle für die 3D-Rekonstruktion.

Der Erfindung liegt die Aufgabe zugrunde, eine verbesserte Möglichkeit zum Ermitteln von 3D-Koordinaten von vorbestimmten Punkten eines Objekts bereitzustellen, insbesondere von optischen Parametern eines Benutzers.

Diese Aufgabe wird durch die Gegenstände der unabhängigen Ansprüche gelöst, welche auch die Erfindung definieren.

Ein erster Aspekt betrifft ein Verfahren zur Ermittlung von 3D-Koordinaten zumindest eines vorbestimmten Punktes eines Objekts, wobei:

a) das Objekt in einem Messbereich angeordnet wird,
b) eine variable Beleuchtungsquelle ein variables Muster auf das im Messbereich angeordnete Objekt projiziert,
c) eine Bildaufnahmevorrichtung, die in vorbekannter Relation zur Beleuchtungsquelle angeordnet ist, ein Bild zumindest eines Teilbereichs des von der variablen Beleuchtungsquelle beleuchteten Objekts aufnimmt,
d) in dem aufgenommenen Bild der zumindest eine vorbestimmte Punkt detektiert wird, und
e) die 3D-Koordinaten des zumindest einen vorbestimmten Punktes aus dem aufgenommenen Bild unter Berücksichtigung der vorbekannten Relation der Bildaufnahmevorrichtung zur Beleuchtungsquelle bestimmt werden, falls eine Überprüfung des aufgenommenen Bildes ergibt, dass der zumindest eine vorbestimmte Punkt im aufgenommenen Bild durch ein Merkmal des variablen Musters markiert ist.

Ziel des Verfahrens kann die Ermittlung von 3D-Koordinaten des zumindest einen vorbestimmten Punktes des Objekts sein. Die 3D-Koordinaten können in einem beliebigen 3D-Koordinatensystem ermittelt werden, z.B. im Bezugssystem der Erde, im Bezugssystem des Objekts, im Bezugssystem der Vorrichtung, mit der das Bild aufgenommen wird, und/oder im Bezugssystem der Bildaufnahmevorrichtung. Die 3D-Koordinaten können nachfolgend weiter verarbeitet werden.

Erfindungsgemäß ist das Objekt der Kopf eines Menschen als Benutzer mit einer daran angebrachten Brillenfassung sein. Hierbei ist - der zumindest eine vorbestimmte Punkt ein Punkt des Systems umfassend den Kopf des Benutzers mit Brillenfassung, der zur Berechnung von optischen Parametern verwendet werden kann, z.B. ein Pupillenmittelpunkt. Der zumindest eine vorbestimmte Punkt kann vom Verfahren abhängen. Hierbei kann das Verfahren auch dazu ausgelegt und vorgesehen sein, für eine Mehrzahl von vorbestimmten Punkten die jeweils zugehörigen 3D-Koordinaten zu ermitteln.

Das Verfahren wird im Zusammenhang mit einem Bestimmen von optischen Parametern aus den ermittelten 3D-Koordinaten beschrieben. Dabei ist es grundsätzlich möglich, das Verfahren auch in anderen Anwendungsgebieten zu verwenden, z.B. im dentalen und/oder orthopädischen Bereich, wobei modellbasierte Oberflächen und/oder Körper verwendet werden, bei denen eine definierte Anzahl von Parametern, die anhand der 3D-Koordinaten vorbestimmter Punkte ermittelt werden können, zur Beschreibung verwendet werden. Weiterhin kann das Verfahren auch verwendet werden, um in industriellen Fertigungsprozessen 3D-Koordinaten zu ermitteln, die maschinell, z.B. durch einen Roboter, angesteuert werden. Dies kann z.B. bei einer Bestückung von Platinen Verwendung finden, bei der vorbestimmte Punkte (wie z.B. Bohrlöcher) der Platinen, die bestückt werden sollen, durch das Verfahren lokalisiert werden. Weiterhin können z.B. Bauteile mit definierten Prüfpunkten als Objekte verwendet werden, bei denen die Prüfpunkte z.B. Gussteile oder Werkstücke mit Befestigungspunkten, z.B. Bohrlöchern, sind. Allgemein ist der zumindest eine vorbestimmte Punkt ein wohldefinierter, vorbestimmter Punkt des Objekts.

Sowohl die Bildaufnahmevorrichtung als auch die Beleuchtungsquelle sind auf den Messbereich ausgerichtet. Der Messbereich kann als ein ausgedehntes dreidimensionales oder zweidimensionales Gebiet ausgebildet sein, oder lediglich durch einen Punkt definiert sein, wie z.B. ein Standpunkt für einen Benutzer mit einer Brillenfassung.

Die variable Beleuchtungsquelle ist dazu ausgebildet und vorgesehen, ein variables Muster auf das im Messbereich angeordnete Objekt zu projizieren. Dabei bedeutet der Zusatz variabel, dass die Beleuchtungsquelle nicht nur ein einziges Muster projizieren kann, sondern eine Mehrzahl unterschiedlicher Muster, und/oder dass die Projektionsrichtung, in der die Beleuchtungsquelle das Muster projiziert, variabel und somit veränderlich ist.

Die Beleuchtungsquelle kann einzelne Pixel aufweisen, die gezielt ansteuerbar sind. So kann als Beleuchtungsquelle z.B. ein Bildschirm vorgesehen sein, z.B. ein LCD. Abhängig davon, welche Pixel der Beleuchtungsquelle angesteuert werden, können von der Beleuchtungsquelle unterschiedlich ausgebildete Muster abgestrahlt werden.

Für das Verfahren kann es ausreichend sein, wenn die variable Beleuchtungsquelle über eine Anzahl Pixel verfügt, die zumindest dem VGA Standard entspricht, also z.B. zumindest 320 x 200 Pixel oder zumindest 640 x 480 Pixel. Die Beleuchtungsquelle ist ansteuerbar und kann während des Verfahrens so angesteuert werden, dass das von der Beleuchtungsquelle abgestrahlte Muster variiert wird. Die Beleuchtungsquelle kann weiterhin ein oder mehrere optische Elemente zur Beeinflussung des abgestrahlten Musters aufweisen, wie z.B. Umlenkspiegel, Prismen, Linsen, Polarisationsstrahlteiler, $\lambda/4$-Plättchen, $\lambda/2$-Plättchen, etc.

Als Bildaufnahmevorrichtung kann z.B. eine Kamera verwendet werden, insbesondere eine Digitalkamera, die ein digitales Bild von zumindest einem Teilbereich des Objekts aufnehmen kann. Die Bildaufnahmeeinrichtung kann weiterhin zumindest ein optisches Umlenkelement wie z.B. ein Umlenkspiegel etc. aufweisen. Hierbei können Bilddaten des Teilbereichs des Objekts über das Umlenkelement umgelenkt werden.

Die Bildaufnahmevorrichtung nimmt ein Bild von zumindest einem Teilbereich des von der Beleuchtungsquelle beleuchteten Objekts auf, wobei die Bildaufnahmevorrichtung Bilddaten erzeugen kann. Die Bilddaten können als digitale Daten des aufgenommenen Bildes ausgebildet sein. Dabei enthält das aufgenommene Bild und somit auch die aufgenommenen Bilddaten zumindest einen Teilbereich des Objektes, der von dem Muster der Beleuchtungsquelle beleuchtet ist. Zur Durchführung des Verfahrens kann eine einzige Bildaufnahmevorrichtung ausreichend sein, die z.B. statisch fest fixiert ist. Das Verfahren verwendet somit kein stereoskopisches Kamerasystem und/oder benötigt keine stereoskopische Bildauswertung. Die 3D-Koordinaten können aus den Bilddaten eines einzigen aufgenommenen Bildes bestimmt werden.

Die Bildaufnahmevorrichtung ist dabei in der vorbekannten Relation zur Beleuchtungsquelle angeordnet. Dies bedeutet, dass eine optische Achse der Bildaufnahmevorrichtung, die z.B. durch die Mitte einer Linse der Bildaufnahmevorrichtung verläuft, in einer festen Relation relativ zu einer Beleuchtungsrichtung der Beleuchtungsquelle angeordnet ist. Da sowohl die optische Achse der Bildaufnahmevorrichtung als auch die Beleuchtungsrichtung der Beieuchtungsquelle durch Umlenkelemente abgelenkt werden können, ist im Rahmen der Erfindung insbesondere der Abschnitt der optischen Achse der Bildaufnahmevorrichtung in Relation zu dem Abschnitt der Beleuchtungsrichtung vorbekannt, die letztlich auf das im Messbereich angeordnete Objekt treffen, bzw. sich mit diesem schneiden.

Die vorbekannte Relation kann einen Winkel zwischen der optischen Achse und der Beleuchtungsrichtung umfassen sowie einen Abstand der Bildaufnahmevorrichtung von der Beleuchtungsquelle.

Die vorbekannte Relation kann alternativ oder zusätzlich für jeden einzelnen Pixel der Beleuchtungsquelle eine zugehörige Abstandsinformation umfassen, beispielsweise in Form einer Tabelle, Zuordnungsfunktion und/oder Liste. Die vorbekannte Relation kann somit insbesondere ein Justieren und/oder ein Kalibrieren der Bildaufnahmevorrichtung relativ zur Beleuchtungsquelle beinhalten. Weiterhin kann die vorbekannte Relation einen Abstand der Bildaufnahmevorrichtung von der Beleuchtungsquelle beinhalten oder einen Abstand eines Umlenkelements der Bildaufnahmevorrichtung von einem Umlenkelement der Beleuchtungsquelle. Zusätzlich zum Abstand können z.B. 3D-Koordinaten der vorgenannten Orte vorbekannt sein als Bestandteil der vorbekannten Relation.

Gemäß dem Verfahren wird in dem von der Bildaufnahmevorrichtung aufgenommenen Bild der zumindest eine vorbestimmte Punkt detektiert. Die Detektion kann dabei manuell oder halbautomatisch unterstützt durch eine Software erfolgen. Insbesondere kann die Detektion auch vollautomatisch erfolgen, z.B. mit Hilfe von geeigneten Softwareprogrammen. In diesem Detektionsschritt wird der zumindest eine Punkt in den aufgenommenen Bilddaten detektiert, bevorzugt werden alle der vorbestimmten Punkte detektiert. Optional kann der oder die detektierten Punkte markiert werden. Dann kann ein Operator, der das Verfahren durchführt oder eine Durchführung des Verfahrens überwacht, die markierten Punkte und somit den Detektionsschritt überprüfen.

Nach der Detektion des zumindest einen vorbestimmten Punktes erfolgt eine Überprüfung des aufgenommenen Bildes. Diese Überprüfung kann entweder automatisch, also z.B. vollständig durch eine Software, vorgenommen werden, manuell, also von dem vorgenannten Operator, z.B. einem Augenoptiker, oder halbautomatisch, also z.B. von dem Operator, der einen von einer Software ermittelten Vorschlag erhält. Bei der Überprüfung des aufgenommenen Bildes wird überprüft, ob der zumindest eine vorbestimmte Punkt durch das Merkmal des variablen Musters markiert ist. Das Merkmal des variablen Musters kann z.B. ein Strich, eine Kontrastkante, ein Kreuz, und/oder ein anderes Merkmal des variablen Musters sein. Bevorzugt ist das Merkmal insbesondere ein dünner Lichtstrich, z.B. lediglich ein Pixel breit, oder eine Kontrastkante, also ein scharfer Übergang von einem im Muster beleuchteten Bereich zu einem vom Muster nicht beleuchteten Bereich. Alternativ oder zusätzlich kann das Merkmal auch ein Übergang von einer ersten Farbe zu einer zweiten Farbe des Musters sein, und/oder ein Übergang von einer ersten Helligkeitsstufe des Musters zu einer zweiten Helligkeitsstufe des Musters.

Es wird überprüft, ob der zumindest eine vorbestimmte Punkt im aufgenommenen Bild von einem solchen Merkmal markiert ist. Diese Überprüfung wird dann bejaht bzw. positiv bewertet, wenn das Merkmal des Musters, also z.B. der Strich oder die Kontrastkante, durch den vorbestimmten Punkt verläuft. Hierbei kann eine Toleranz von z.B. bis zu fünf Pixeln, bevorzugt bis zu einem Pixel, zwischen dem vorbestimmten Punkt und dem Merkmal im aufgenommenen Bild berücksichtigt werden. Die Markierung ist insbesondere dann relativ genau detektierbar, wenn sich ein längliches Merkmal des Musters, z.B. ein Strich oder eine Kontrastkante, mit einem länglichen Charakteristikum des Objekts schneidet, wie z.B. einem Abschnitt einer Brillenfassung. Ein solcher Schnittpunkt vom Merkmal des Musters mit einem länglichen Charakteristikum des Objekts unter einem Winkel kann bei der Überprüfung als eine Markierung des vorbestimmten Punktes gewertet und/oder eingeschätzt werden.

Aus der vorbekannten Relation der Beleuchtungsquelle zur Bildaufnahmevorrichtung kann somit anhand der Bilddaten bestimmt, ermittelt und/oder berechnet werden, welche Koordinaten im dreidimensionalen Raum dem in den Bilddaten markierten vorbestimmten Punkt zugeordnet sind. So können die 3D-Koordinaten z.B. durch Triangulation ermittelt werden. Alternativ oder zusätzlich können die zugehörigen 3D-Koordinaten aus einem vorbekannten Zusammenhang der einzelnen Pixel der Beleuchtungsquelle im aufgenommenen Bild zu einem Abstand ermittelt werden. So kann bei einer Justierung einer fest installierten, statischen Beleuchtungsquelle und einer fest installierten, statischen Bildaufnahmevorrichtung ein fester Zusammenhang von jedem einzelnen Pixel der Beleuchtungsquelle zum Abstand von der Bildaufnahmevorrichtung gemessen und abgespeichert werden. Eine solche Justierung ist nachfolgend näher erläutert.

Die 3D-Koordinaten können z.B. als kartesische Koordinaten berechnet werden, als Zylinder- und/oder als Kugelkoordinaten. Am Ende des Verfahrens muss nicht zwangsweise eine Ausgabe der 3D-Koordinaten erfolgen. So können die 3D-Koordinaten auch zunächst weiterverarbeitet werden, insbesondere zur Berechnung von optischen Parametern eines Benutzers. Diese optischen Parameter, und nicht die zur deren Berechnung ermittelten 3D-Koordinaten, können als Ausgabe ausgegeben werden. In anderen Anwendungsfällen kann z.B. auch nur eine gut/schlecht Aussage die auf Basis der ermittelten 3D-Koordinaten getroffen wird ausgegeben werden.

Mit dem Verfahren können lediglich die Koordinaten eines der vorbestimmten Punkte aus einem Bild ermittelt werden und die Koordinaten der übrigen vorbestimmten Punkte aus jeweils eigens zugeordneten, anderen Bildern, die z.B. nacheinander aufgenommen werden. Alternativ können zugleich alle 3D-Koordinaten aller vorbestimmten Punkte aus einem einzigen Bild ermittelt werden. Dazu wird bei der Überprüfung überprüft, ob nicht nur der eine vorbestimmte Punkt, sondern alle der vorbestimmten Punkte von jeweils zumindest einem Merkmal des variablen Musters markiert sind. Erst dann erfolgt die Bestimmung der jeweils zugehörigen 3D-Koordinaten.

Bei dem Verfahren handelt es sich nicht um ein stereoskopisches Verfahren. Dies bedeutet, dass zur Ermittlung der 3D-Koordinaten kein Korrespondenzproblem gelöst werden muss, bei dem, wie in stereoskopischen Verfahren üblich, zueinander korrespondierende Punkte von Bildern aus unterschiedlichen Aufnahmerichtungen gefunden werden müssen. Die Lösung des Korrespondenzproblems entfällt beim Verfahren gemäß dem ersten Aspekt. Dadurch werden mögliche Fehlerquellen reduziert.

Zugleich ist es möglich, das Verfahren vollautomatisch oder zumindest teilautomatisch durchzuführen, d.h. unter Zuhilfenahme eines Prozessors und einer auf dem Prozessor ausgeführten Software, z.B. eines Computerprogrammprodukts. Sowohl die Detektion der vorbestimmten Punkte im aufgenommenen Bild als auch die Überprüfung, ob diese Punkte durch jeweils ein Merkmal des Musters markiert sind, kann vollautomatisch oder zumindest halbautomatisch durchgeführt werden. Dies erleichtert und vereinfacht die Durchführung des Verfahrens.

Weiterhin ist das Verfahren unter Zuhilfenahme einer einzigen Bildaufnahmevorrichtung durchführbar, die statisch installiert sein kann und die dazu vorgesehen und ausgebildet sein kann, aus lediglich einer einzigen Bildaufnahmerichtung entlang ihrer optischen Achse ein Bild vom im Messbereich angeordneten Objekt aufzunehmen. Beim Verfahren kann somit insbesondere auf eine weitere Bildaufnahmevorrichtung und ein stereoskopisches Kamerasystem verzichtet werden.

Erfindungsgemäß wird, falls die Überprüfung des aufgenommenen Bildes ergibt, dass der zumindest eine vorbestimmte Punkt im aufgenommenen Bild nicht durch ein Merkmal des variablen Musters markiert ist, das von der Beleuchtungsquelle auf das Objekt projizierte variable Muster variiert und anschließend werden die Schritte c) bis e) unter Beleuchtung mit dem variierten Muster wiederholt. Kommt die Überprüfung somit zu dem Ergebnis, dass entweder keiner der vorbestimmten Punkte, oder nicht alle der vorbestimmten Punkte, in den Bilddaten, also dem aufgenommenen Bild, nicht von jeweils zumindest einem Merkmal des variablen Musters markiert ist, wird das Muster variiert. Eine Variation des Musters kann z.B. dadurch erfolgen, dass zumindest eine Untergruppe der Pixel der variablen Beleuchtungsquelle anders angesteuert wird als beim Aufnehmen des vorangegangenen Bildes. Dadurch kann ein variiertes Muster bereitgestellt werden. Beim Variieren des Musters können insbesondere die Merkmale des variablen Musters (z.B. lateral im zweidimensionalen Bild) verschoben werden, also z.B. die Striche, Kreuze, und/oder Kontrastkanten des Musters. Die Variation des Musters bewirkt beim Aufnehmen des folgenden Bildes, dass die Merkmale des Musters an anderen Orten angeordnet sind, also z.B. an den vorbestimmten Punkten. Bei der Variation des Musters kann insbesondere berücksichtigt werden, dass einer oder einige der vorbestimmten Punkte bereits durch ein Merkmal des variablen Musters markiert sind. Diese Teilbereiche des variablen Musters können konstant gehalten werden, also nicht variiert werden. Hierbei kann z.B. die Ansteuerung einer Untergruppe der Pixel der Beleuchtungsquelle, die für Bildung des Teilbereichs mit dem Merkmal verantwortlich sind, das einen der vorbestimmten Punkte markiert, konstant belassen werden. Zur Durchführung des Verfahrens ist es ausreichend, das Muster lediglich in den Teilbereichen des aufgenommenen Bildes (z.B. durch Ansteuerung einer entsprechenden Untergruppe von Pixeln) zu variieren, in denen einer der vorbestimmten Punkte angeordnet ist, der noch nicht von einem Merkmal des variablen Musters markiert ist.

Nachdem das Muster somit variiert ist, nimmt die Bildaufnahmevorrichtung, wie im Schritt c) beschrieben, ein Bild des Teilbereichs des von der variablen Beleuchtungsquelle beleuchteten Objekts auf. Dabei ist das Objekt von dem veränderten Muster beleuchtet, also dem variierten Muster. Anschließend werden in dem erneut aufgenommenen Bild der oder die vorbestimmten Punkte detektiert und es wird wiederum überprüft, ob der oder die vorbestimmten Punkte durch jeweils zumindest ein Merkmal des variierten Musters markiert sind. Auch wenn in diesem Verfahren nacheinander mehrere Bilder aufgenommen werden, so wird zur Berechnung der 3D-Koordinaten des zumindest einen vorbestimmten Punktes lediglich ein einziges der aufgenommenen Bilder verwendet, insbesondere dasjenige, in dem der vorbestimmte Punkt durch das Merkmal des variablen Musters markiert ist.

Gemäß einer Weiterbildung dieser Ausführungsform wird das von der Beleuchtungsquelle auf das Objekt projizierte variable Muster so lange variiert und anschließend die Schritte c) bis e) des Verfahrens mit dem variierten Muster wiederholt, bis der zumindest eine vorbestimmte Punkt im aufgenommenen Bild durch ein Merkmal des variablen Musters markiert ist und die 3D-Koordinaten des zumindest einen vorbestimmten Punktes berechnet werden. Das Verfahren kann also solange iteriert und/oder wiederholt werden, bis die 3D-Koordinaten des einen vorbestimmten Punktes oder der mehreren vorbestimmten Punkte bestimmt werden können. Solange im zuletzt aufgenommenen Bild der zumindest eine Punkt noch nicht hinreichend durch ein Merkmal des variablen Musters markiert ist, wird das in den Messbereich projizierte Muster verändert und die Verfahrensschritte c), d) und e) werden wiederholt. Durch dieses iterative Verfahren wird bewirkt, dass die 3D-Koordinaten des zumindest einen vorbestimmten Punktes zunächst gezielt markiert werden und anschließend sicher ermittelt werden können.

Gemäß einer Ausführungsform wird das variable Muster gezielt so variiert, dass das variierte Muster voraussichtlich den zumindest einen vorbestimmten Punkt des Objekts mit einem Merkmal des variierten Musters markiert. Mit anderen Worten wird bei der Variation des projizierten Musters berücksichtigt, wo in dem zuletzt aufgenommenen Bild der zumindest eine vorbestimmte Punkt detektiert worden ist. Da jedoch die 3D-Koordinaten des vorbestimmten Punktes noch nicht bekannt sind, und diese ohne die Markierung auch noch nicht aus dem zweidimensionalen Bild ermittelt werden können, können die zweidimensionalen Koordinaten des Punktes im zuletzt aufgenommenen Bild lediglich dazu verwendet werden, das Muster so zu variieren, dass ein Merkmal des Musters in einem voraussichtlichen, abgeschätzten Ort des vorbestimmten Punkts angeordnet wird. Diese Abschätzung des ungefähren Ortes des vorbestimmten Punktes kann durch eine iterative Annäherung, also eine Wiederholung der Schritte c) bis e) des Verfahrens unter Variation des Musters so verbessert werden, dass sich ein Merkmal des Musters dem vorbestimmten Punkt iterativ annähert. Die Variation des Musters erfolgt somit unter Berücksichtigung einer Abschätzung des Ortes des vorbestimmten Punktes aus dem bislang aufgenommenen zweidimensionalen Bild, und kann zudem unter Zugriff auf vorbekannte Bestandsdaten verbessert werden. Die Berücksichtigung der Abschätzung eines voraussichtlichen Ortes des zumindest einen vorbestimmten Punktes reduziert die Anzahl der notwendigen Iterationsschritte bis zur Berechnung der tatsächlichen 3D-Koordinaten und verkürzt somit die Zeit, die zur Durchführung des Verfahrens benötigt wird.

Gemäß einer Ausführungsform werden aufeinanderfolgende Bilder mit einer Wiederholfrequenz von zumindest 10 Hz aufgenommen, bis die 3D-Koordinaten des zumindest einen vorbestimmten Punktes berechnet werden. Hierbei folgt der Schritt des Detektierens, des Überprüfens und des Variierens des Musters automatisch und so schnell, dass bereits nach einer Zehntelsekunde das nächste Bild mit einem variierten Muster aufgenommen werden kann. Die Bildwiederholfrequenz beträgt somit zumindest 10 Hz, bevorzugt zumindest 20 Hz. Die hohe Bildverarbeitungsgeschwindigkeit, Variationsgeschwindigkeit und Aufnahmegeschwindigkeit kann bewirken, dass bei einer leichten Bewegung des Objektes, wie z.B. eines Benutzers mit einer Brillenfassung, das Muster erfolgreich so variiert werden kann, dass die vorbestimmten Punkte des Objekts im aufgenommenen Bild markiert sind. Die hohe Wiederholfrequenz ermöglicht somit auch ein Ermitteln von 3D-Koordinaten vorbestimmter Punkte eines sich zumindest lediglich langsam bewegenden Objektes.

Gemäß einer Ausführungsform weist das variable Muster zumindest eine im Wesentlichen horizontale und/oder vertikale Kontrastkante als Merkmal auf, die bei Variation des Musters verschoben und/oder verändert wird. Die Kontrastkante kann dabei insbesondere als eine Linie ausgebildet sein, insbesondere eine lediglich wenige Pixel, z.B. ein einziges Pixel breite Linie. Die Kontrastkante kann auch als scharfer Kontrastübergang entlang einer Linie ausgebildet sein, z.B. zwischen einem beleuchteten Bereich und einem unbeleuchteten Bereich des Musters. Die Ausdrücke "horizontal" und "vertikal" beziehen sich dabei entweder auf das Bezugssystem der Erde oder auf das Bezugssystem des Objekts. Insbesondere kann es sich bei den Begriffen um eine vertikale und horizontale Richtung im Kastenmaß handeln.

Unter einer Bemaßung im Kastenmaß wird im Sinne dieser Erfindung das Maßsystem verstanden, wie es in einschlägigen Normen, beispielsweise in der DIN EN ISO 8624 und/oder der DIN EN ISO 1366 DIN und/oder der DIN 58208 und/oder der DIN 5340 beschrieben wird. Ferner wird hinsichtlich des Kastenmaßes und weiterer verwendeter herkömmlicher Begriffe und Parameter auf das Buch "Die Optik des Auges und der Sehhilfen" von Dr. Roland Enders, 1995 Optische Fachveröffentlichung GmbH, Heidelberg, sowie das Buch "Optik und Technik der Brille" von Heinz Diepes und Ralf Blendowski, 2002 Verlag Optische Fachveröffentlichungen GmbH, Heidelberg, verwiesen. Die Normen sowie das genannte Buch stellen für die Begriffsdefinitionen insoweit einen integralen Offenbarungsbestandteil der vorliegenden Anmeldung dar.

Ein Verschieben der Kontrastkante kann hierbei insbesondere im Wesentlichen senkrecht zur Verlaufsrichtung der Kontrastkante erfolgen. Somit können hierbei im Wesentlichen horizontale Kontrastkanten in eine im Wesentlichen vertikale Richtung verschoben werden, während im Wesentlichen vertikale Kontrastkanten in eine im Wesentlichen horizontale Richtung verschoben werden können. Dabei bleibt die eigentliche Ausrichtung der jeweiligen Kontrastkante erhalten und/oder konstant.

Gemäß einer Ausführungsform weist das variable Muster eine Anzahl geometrischer Formen mit Kontrastkanten als Merkmale auf. Bei Variation des Musters wird die Anzahl der geometrischen Formen und somit die Anzahl der Kontrastkanten des Musters erhöht. Dabei kann insbesondere die Anzahl der geometrischen Formen in einem Teilbereich des Musters erhöht werden, in dem im aufgenommenen Bild der zumindest eine vorbestimmte Punkt detektiert worden ist. Als geometrische Formen können z.B. Rechtecke, Dreiecke, und/oder Trapeze verwendet werden. Als einfaches Beispiel kann z.B. im zuletzt aufgenommenen Bild eine geometrische Form wie z.B. ein Rechteck ermittelt werden, in dem der vorbestimmte Punkt angeordnet ist. In der darauffolgenden Bildaufnahme wird das Muster dahingehend variiert, dass zumindest diejenige geometrische Form, in der der Punkt detektiert worden ist, weiter unterteilt wird. So kann z.B. ein Rechteck als geometrische Form in kleinere, im Wesentlichen gleich große geometrische Formen unterteilt werden, wie z.B. mehrere kleinere Rechtecke. Ein Rechteck könnte z.B. in vier kleinere Rechtecke unterteilt werden, die im Wesentlichen gleich groß sind. Alternativ könnte das Rechteck auch in mehre Rechtecke unterteilt werden, z.B. 16 oder mehr. Durch die Verwendung mehrerer kleinerer geometrischer Formen erhöht sich die Anzahl an Kontrastkanten in einem Bereich des Musters, der voraussichtlich den zumindest einen vorbestimmten Punkt enthält. Sollen beim Verfahren die 3D-Koordinaten mehrerer vorbestimmter Punkte ermittelt werden, können alle diejenigen geometrischen Formen bei Variation des Musters weiter unterteilt werden, die einen der vorbestimmten Punkte enthalten. Dadurch erfolgt eine besonders effiziente Variation, die nach möglichst wenigen Iterationsschritten zu einer erfolgreichen Bestimmung der 3D-Koordinaten führen kann.

Erfindungsgemäß ist das Objekt ein Kopf eines Benutzers mit einer darin in Gebrauchsstellung angeordneten Brillenfassung. Der Teilbereich des Kopfes des Benutzers mit der daran in Gebrauchsstellung angeordneten Brillenfassung, der von der Bildaufnahmevorrichtung aufgenommen wird, kann hierbei zumindest eine Pupille, beide Pupillen, und/oder die von der Brillenfassung umrandeten Pupillen umfassen. Die Gebrauchsstellung ist z.B. in den eingangs beschriebenen Normen definiert. In dieser Ausführungsform kann das Verfahren zur Berechnung von optischen Parametern des Benutzers verwendet werden, die z.B. bei der Bereitstellung individueller Brillengläser berücksichtigt werden können.

In einer Weiterbildung dieser Ausführungsform wird als der zumindest eine vorbestimmte Punkt zumindest einer der folgenden Punkte verwendet:

- ein Pupillenmittelpunkt,
- ein innerer temporaler Fassungspunkt,
- ein innerer nasaler Fassungspunkt,
- ein innerer Fassungspunkt oberhalb der Pupille und/oder
- ein innerer Fassungspunkt unterhalb der Pupille.

Bevorzugt werden beim Verfahren die 3D-Koordinaten aller fünf vorgenannten Punkte für jedes der beiden Augen des Benutzers ermittelt. Somit können beim Verfahren insgesamt die zehn vorgenannten Punkte ermittelt werden. Aus den 3D-Koordinaten dieser zehn Punkte lassen sich die meisten relevanten optischen Parameter des Benutzers ermitteln. Alternativ oder zusätzlich können weitere Fassungsberandungspunkte, insbesondere im Kastenmaß, ermittelt werden.

Hierbei können aus den bestimmten 3D-Koordinaten der vorbestimmten Punkte optische Parameter des Benutzers bestimmt werden. Als ein optischer Parameter kann insbesondere der Pupillenabstand als Länge zwischen den Pupillenmittelpunkten im dreidimensionalen Raum berechnet werden. Zusätzlich kann eine Aufteilung des Pupillenabstands in einen rechten Pupillenabstand und einen linken Pupillenabstand als zusätzliche optische Parameter erfolgen. Weiterhin kann der optische Parameter Fassungsscheibenwinkel für eine linke und/oder rechte Seite der Brillenfassung berechnet werden. Weiterhin können z.B. die optischen Parameter Scheibenlänge und/oder Scheibenhöhe ermittelt werden, die mit den genannten zehn Punkten nur näherungsweise berechnet werden können. Für eine genauere Berechnung dieser Parameter kann das voranstehend aufgeführte Kastenmaß verwendet werden, das bei der Berechnung berücksichtigt werden kann.

Gemäß einer Weiterbildung des Verfahrens, bei dem ein Benutzer mit in Gebrauchsstellung angeordneter Brillenfassung als Objekt verwendet wird, werden die 3D-Koordinaten eines Pupillenmittelpunkts des Benutzers ermittelt, indem zumindest zwei zum Pupillenmittelpunkt benachbarte Punkte als vorbestimmte Punkte mit jeweils zumindest einem Merkmal des variablen Musters markiert werden, aus deren 3D-Koordinaten die 3D-Koordinaten des Pupillenmittelpunkts abgeschätzt werden. Beim Pupillenmittelpunkt ergibt sich die Problematik, dass der Pupillenmittelpunkt selber lediglich eingeschränkt von einer Beleuchtungsquelle markiert werden kann. So ist der Pupillenmittelpunkt biologisch dazu ausgebildet, das einfallende Licht ins Innere des Auges zu leiten. Deswegen kann sich an dieser Stelle eine Verzerrung in den Bilddaten ergeben. Anstelle den jeweiligen Pupillenmittelpunkt direkt mit jeweils einem Merkmal des Musters zu markieren, wird gezielt nicht der eigentliche Pupillenmittelpunkt, sondern zwei, drei oder mehr zum Pupillenmittelpunkt benachbarte Punkte als vorbestimmte Punkte ausgewählt und vom Muster markiert. Die eigentlich gesuchten 3D-Koordinaten des Pupillenmittelpunkts können aus einem Mittelwert der jeweils benachbarten Punkte ermittelt werden. So können z.B. ein horizontal rechts und links vom Pupillenmittelpunkt angeordneter Punkt auf der Iris markiert und deren 3D-Koordinaten ermittelt werden. Dadurch wird die Bestimmung der 3D-Koordinaten des rechten und/oder linken Pupillenmittelpunkts erleichtert und verbessert.

Ein zweiter Aspekt betrifft eine Vorrichtung zur Ermittlung von 3D-Koordinaten zumindest eines vorbestimmten Punktes eines Objekts. Die Vorrichtung weist eine variable Beleuchtungsquelle zum Projizieren eines variablen Musters, das in einem Messbereich angeordnete Objekt, sowie eine Bildaufnahmevorrichtung auf, die in vorbekannter Relation zur Beleuchtungsquelle angeordnet ist, und die dazu ausgebildet und vorgesehen ist, ein Bild von zumindest einem Teilbereich des von der variablen Beleuchtungsquelle beleuchteten Objekts aufzunehmen. Die Vorrichtung weist ein Detektionsmodul zum Detektieren des zumindest einen vorbestimmten Punktes in dem aufgenommenen Bild auf und ein Koordinatenbestimmungsmodul zum Bestimmen der 3D-Koordinaten des zumindest einen vorbestimmten Punktes aus dem aufgenommenen Bild, unter Berücksichtigung der vorbekannten Relation der Bildaufnahmevorrichtung zur Beleuchtungsquelle, falls eine Überprüfung des aufgenommenen Bildes ergibt, dass der zumindest eine vorbestimmte Punkt im aufgenommenen Bild durch ein Merkmal des variablen Musters markiert ist.

Die Vorrichtung kann insbesondere zur Durchführung des erfindungsgemäßen Verfahrens verwendet werden. Deswegen treffen alle zum Verfahren angegebenen Ausführungen auch auf die Vorrichtung zu und umgekehrt. Die Vorrichtung kann als eine statische Vorrichtung ausgebildet sein, die ortsfest angeordnet ist, also z.B. an einem vorgegebenen Ort in einem Raum. Der Messbereich kann ein von der Vorrichtung beabstandeter Bereich im selben Raum sein. An der Vorrichtung ist sowohl die Beleuchtungsquelle als auch die Bildaufnahmevorrichtung statisch fixiert, wodurch sich die vorbekannte Relation ergibt. Zudem kann auch die Relation des Messbereichs zur Vorrichtung vorbekannt sein.

Sowohl das Detektionsmodul als auch das Koordinatenbestimmungsmodul kann eine graphische Auswertung von Bilddaten des aufgenommenen Bildes umfassen. Sowohl das Detektionsmodul als auch das Koordinatenbestimmungsmodul kann als ein Software-gestütztes Modul ausgebildet sein. Auch die Überprüfung des aufgenommenen Bildes auf eine Markierung des zumindest einen vorbestimmten Punktes kann Software-gestützt ausgeführt werden, z.B. durch ein entsprechendes Überprüfungsmodul. Die einzelnen Module der Vorrichtung können z.B. auf einem Prozessor durchgeführt werden, insbesondere auf demselben Prozessor.

Erfindungsgemäß weist die Vorrichtung zusätzlich ein Mustervariationsmodul auf, das, falls die Überprüfung des aufgenommenen Bildes ergibt, dass der zumindest eine vorbestimmte Punkt im aufgenommenen Bild nicht durch ein Merkmal des variablen Musters markiert ist, das von der Beleuchtungsquelle auf das Objekt projizierte Muster variiert. Das Mustervariationsmodul kann wie voranstehend im Zusammenhang mit dem Verfahren beschriebene Variationsmöglichkeiten durchführen, insbesondere ein Verändern und/oder Verschieben von Kontrastkanten des Musters, und/oder ein Verändern der Anzahl und Größe von geometrischen Formen im Muster, insbesondere in dem Bereich des Musters, in dem der zumindest eine vorbestimmte Punkt angeordnet ist. Das Mustervariationsmodul kann das Muster solange und so oft variieren, bis ein nachfolgend mittels der Bildaufnahmevorrichtung aufgenommenes Bild zur Ermittlung der 3D-Koordinaten verwendet werden kann. Dies bedeutet, dass das Muster solange variiert wird, bis im zuletzt aufgenommenen Bild die Überprüfung ergibt, dass der zumindest eine vorbestimmte Punkt von zumindest einem Merkmal des variablen Musters markiert ist.

Gemäß einer Weiterbildung weist die Vorrichtung eine Parameterbestimmungseinrichtung auf, welche ausgelegt ist, aus den bestimmten 3D-Koordinaten optische Parameter eines Benutzers zu bestimmen, sofern als Objekt der Kopf des Benutzers mit einer darin in Gebrauchsstellung angeordneten Brillenfassung verwendet wird.

Die Erfindung betrifft ein Computerprogrammprodukt umfassend Programmteile, welche, wenn geladen in einen Computer, zur Durchführung und/oder Steuerung eines Verfahrens nach einem der Ansprüche 1 bis 9 ausgelegt sind. Beim Computerprogrammprodukt kann es sich insbesondere um eine Softwareprodukt handeln und/oder eine Vorrichtung mit einem Computerprozessor, auf den eine entsprechende Software geladen werden kann.

Die Erfindung wird nachfolgend anhand von in Figuren dargestellten Ausführungsbeispielen näher erläutert. Es zeigen:

Fig. 1A      eine schematisch dargestellte Ansicht von oben auf einen Benutzer mit Elementen einer Vorrichtung zur Bestimmung von 3D-Koordinaten vorbestimmter Punkte;

Fig. 1B      eine schematisch dargestellte Seitenansicht auf den Benutzer mit Elementen der Vorrichtung zur Bestimmung von 3D-Koordinaten vorbestimmter Punkte;

Fig. 2      in einer schematischen Darstellung von einer Bildaufnahmevorrichtung aufgenommene Bilddaten eines Bildes eines Benutzers mit Brillenfassung;

Fig. 3A, 3B, und 3C      in einer schematischen Darstellung Muster, die von einer Beleuchtungsquelle projiziert werden;

Fig. 4      in einer schematischen Darstellung einen Teilbereich eines von einer Bildaufnahmevorrichtung aufgenommenen Bildes eines Benutzers mit Brillenfassung;

Fig. 5A      in einer schematischen Darstellung ein erstes Muster, das von einer Beleuchtungsquelle projiziert wird;

Fig. 5B          in einer schematischen Darstellung ein zweites Muster, das aus einer Variation des in Fig. 5A dargestellten ersten Musters generiert ist;

Fig. 5C          in einer schematischen Darstellung ein drittes Muster, das aus einer Variation des in Fig. 5B dargestellten zweiten Musters generiert ist;

Fig. 5D          in einer schematischen Darstellung ein viertes Muster, das aus einer Variation des in Fig. 5C dargestellten dritten Musters generiert ist;

Fig. 6A          in einer schematischen Darstellung ein erstes Bild eines von einer Brillenfassung umrandeten Auges eines Benutzers, auf das das in Fig. 5A gezeigte erste Muster projiziert ist;

Fig. 6B          in einer schematischen Darstellung ein zweites Bild eines von einer Brillenfassung umrandeten Auges eines Benutzers, auf das das in Fig. 5B gezeigte zweite Muster projiziert ist;

Fig. 6C          in einer schematischen Darstellung ein drittes Bild eines von einer Brillenfassung umrandeten Auges eines Benutzers, auf das das in Fig. 5C gezeigte dritte Muster projiziert ist;

Fig. 6D          in einer schematischen Darstellung ein viertes Bild eines von einer Brillenfassung umrandeten Auges eines Benutzers, auf das das in Fig. 5D gezeigte vierte Muster projiziert ist; und

Fig. 7          ein Flussdiagramm eines Verfahrens zum Ermitteln von 3D-Koordinaten zumindest eines vorbestimmten Punktes.

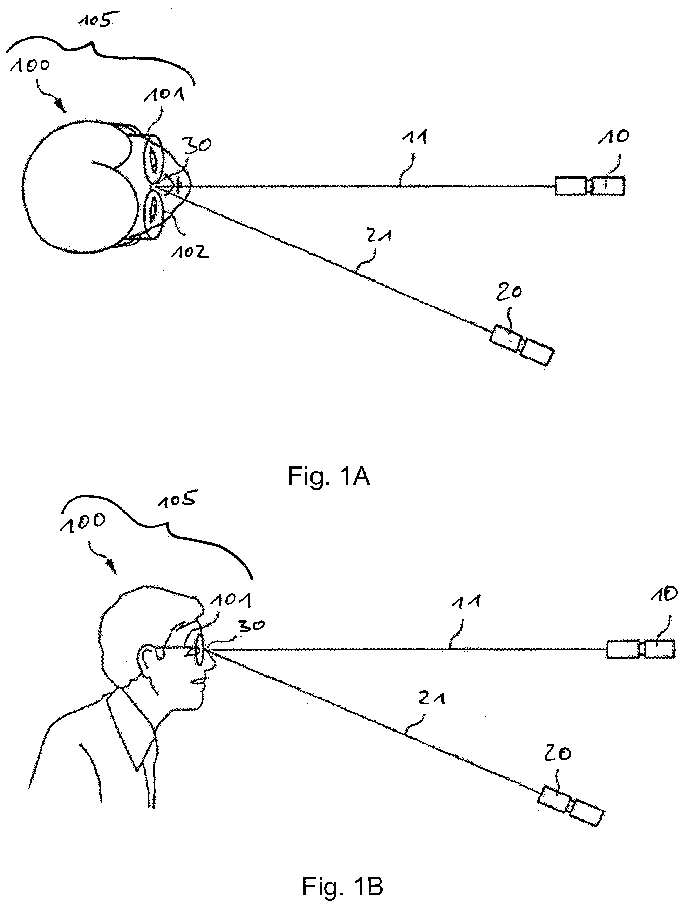

**Figuren 1A und 1B** zeigen in einer schematischen Darstellung einen Benutzer 100 im Messbereich einer Vorrichtung zum Bestimmen von 3D-Koordinaten vorbestimmter Punkte. Von der Vorrichtung sind als Elemente lediglich eine Bildaufnahmevorrichtung 10 sowie eine Beleuchtungsquelle 20 gezeigt. Sowohl die Bildaufnahmevorrichtung 10 als auch die Beleuchtungsquelle 20 sind auf einen Messbereich ausgerichtet. Der Messbereich ist in den Figuren 1A und 1B nicht eigens gekennzeichnet. Im Messbereich ist der Benutzer 100 angeordnet, genauer der Kopf des Benutzers 100 mit einer daran in Gebrauchsstellung angeordneten Brillenfassung 101. In der voranstehend benutzten Terminologie bilden der Kopf des Benutzers 100 und die daran in Gebrauchsstellung angeordnete Brillenfassung 101 ein Objekt 105, das im Messbereich der Vorrichtung angeordnet ist. Die Gebrauchsstellung ist in den eingangs aufgezeigten Normen definiert. Die Vorrichtung ist dazu ausgebildet und vorgesehen, vorbestimmte Punkte des Objekts 105 zu detektieren und deren 3D-Koordinaten zu berechnen. Dies dient zur Berechnung von optischen Parametern wie z.B. einer Pupillendistanz, einem Fassungsscheibenwinkel, einer Brillenglasvorneigung, einem Hornhautscheitelabstand von Brille und Auge sowie einer Einschleifhöhe der Brillengläser als optische Parameter.

Die Bildaufnahmevorrichtung 10 kann als eine digitale Kamera ausgebildet sein und weist eine optische Achse 11 auf. Die optische Achse 11 ist vom Mittelpunkt einer Aufnahmelinse und/oder Blendenöffnung der Bildaufnahmevorrichtung 10 auf den Messbereich gerichtet und definiert eine Aufnahmerichtung eines Bildes, das von der Bildaufnahmevorrichtung 10 aufgenommen werden kann. Ähnlich ist die Beleuchtungsquelle 20 so auf den Messbereich gerichtet, dass eine Beleuchtungsrichtung 21 von der Beleuchtungsquelle 20 auf den Messbereich gerichtet ist. Die Beleuchtungsrichtung 21 definiert dabei eine Richtung, in die von der Beleuchtungsquelle 20 aus Licht auf den Messbereich emittiert wird. Die Beleuchtungsquelle 20 ist dazu ausgebildet und vorgesehen, Licht in Form eines strukturierten Musters zu emittieren. Das von der Beleuchtungsquelle 20 emittierte Muster ist somit als ein strukturiertes Lichtmuster ausgebildet. Dieses strukturierte Lichtmuster wird auf das Objekt 105 projiziert, im gezeigten Ausführungsbeispiel auf den Kopf des Benutzers 100 und die daran angeordnete Brillenfassung 101. Das strukturierte Lichtmuster kann insbesondere als ein im Wesentlichen einfarbiges Lichtmuster ausgebildet sein, also z.B. aus Licht einer einzigen Wellenlänge ausgebildet sein. Das Lichtmuster weist dabei helle und dunkle Stellen auf, also vom Licht beleuchtete Teilbereiche und vom Licht unbeleuchtete Teilbereiche des Lichtmusters. Das Lichtmuster kann Merkmale mit einem Kontrastübergang aufweisen, insbesondere Kontrastkanten, als wohldefinierte, zumindest teilweise geradlinig angeordnete Übergänge von einem Teilbereich des Musters mit einer hohen Lichtintensität zu einem Teilbereich des Musters mit einer niedrigen Lichtintensität und umgekehrt. Hierbei kann ein Teilbereich niedriger Lichtintensität z.B. als ein Teilbereich des Lichtmusters ausgebildet sein, dessen Lichtintensität zumindest 50% geringer, bevorzugt zumindest 75% geringer, besonders bevorzugt zumindest 95% geringer als die Lichtintensität des benachbarten Teilbereichs mit der hohen Lichtintensität ist. In einem Ausführungsbeispiel ist der zumindest eine Teilbereich mit niedriger und/oder geringerer Lichtintensität nicht von der Beleuchtungsquelle beleuchtet.

Das von der Beleuchtungsquelle 20 in den Messbereich projizierte Muster ist variabel. Dies bedeutet, dass die Beleuchtungsquelle 20 unterschiedliche Muster emittieren kann. Dazu kann die Beleuchtungsquelle 20 z.B. als ein Bildschirm mit einzelnen Pixeln ausgebildet sein, die einzeln ansteuerbar sind. Eine Variation des von der Beleuchtungsquelle 20 emittierten Musters kann somit auf einer Variation des Lichts beruhen, das von jedem einzelnen Pixel der Beleuchtungsquelle 20 emittiert wird. Die Beleuchtungsquelle kann somit das von ihr emittierte Muster auf einer Pixel-by-Pixel Basis variieren. Hierbei können Untergruppen von Pixeln Teilbereichen des Musters so zugeordnet sein, dass mittels eines Ansteuerns einer oder mehrerer Untergruppe(n) von Pixeln die Lichtintensität eines Teilbereichs oder mehrerer Teilbereiche des Musters gesteuert und/oder geregelt wird.

Die Bildaufnahmevorrichtung 10 und die Beleuchtungsquelle 20 sind in einer vorbekannten Relation zueinander angeordnet. Dies kann bedeuten, dass die Bildaufnahmevorrichtung einen bekannten Abstand im dreidimensionalen Raum zur Beleuchtungsquelle 20 aufweist. Weiterhin kann die Anordnung und insbesondere die Verlaufsrichtung der optischen Achse 11 vorbekannt sein, ebenso wie die Anordnung und Verlaufsrichtung der Beleuchtungsrichtung 21. Insbesondere kann ein Winkel zwischen der optischen Achse 11 und der Beleuchtungsrichtung 21 vorbekannt sein.

In der in den Figuren 1A und 1B gezeigten Ausführungsform schneiden sich die optische Achse 11 und die Beleuchtungsrichtung 21 an einem Schnittpunkt 30. Dieser Schnittpunkt 30 ist im Messbereich der Vorrichtung angeordnet. Im gezeigten Ausführungsbeispiel ist der Schnittpunkt in etwa zwischen den Augen des Benutzers auf dem Nasenrücken angeordnet. In alternativen Ausführungsformen müssen sich die optische Achse 11 und die Beleuchtungsrichtung 21 nicht zwangsweise in einem Punkt schneiden, sondern können im Messbereich lediglich einen geringsten Abstand zueinander aufweisen. Ein solcher geringster Abstand zueinander kann z.B. maximal 10 cm betragen. Aus den vorbekannten Anordnungen der Bildaufnahmevorrichtung 10 und der Beleuchtungsquelle 20 sowie der zugehörigen optischen Achse 11 und der Beleuchtungsrichtung 21 kann mittels Triangulation eine Berechnung der 3D-Koordinaten vorbestimmter Punkte im von der Bildaufnahmevorrichtung 10 aufgenommenen Bild erfolgen.

Alternativ oder zusätzlich hierzu kann die Vorrichtung unter statisch fixierter Anordnung der Bildaufnahmevorrichtung 10 zur Beleuchtungsquelle 20 justiert, kalibriert und/oder fixiert sein. Zur Kalibrierung der Vorrichtung, also um die vorbekannte Relation der Beleuchtungsquelle 20 zur Bildaufnahmevorrichtung 10 aufzunehmen und/oder abzuspeichern, kann an Kalibrierobjekt verwendet werde. Als Justierung kann für jeden einzelnen Pixel der Beleuchtungsquelle 20 eine Formel und/oder eine Korrespondenztabelle angelegt werden, die jedem einzelnen Pixel der Beleuchtungsquelle 20 eine 3D-Koordinate abhängig davon zuordnet, an welchem Ort im aufgenommenen, zweidimensionalen Bild der Bildaufnahmevorrichtung dieser Pixel angeordnet ist. Da die Beleuchtungsquelle 20 und die Bildaufnahmevorrichtung 10 so relativ zueinander angeordnet sind, dass die optische Achse 11 und die Beleuchtungsrichtung 21 sich entweder unter einem Winkel schneiden, oder das Projektionen dieser beiden Geraden auf eine horizontale und/oder vertikale Ebene sich unter einem Winkel schneiden, diese beiden Geraden also nicht parallel zueinander ausgerichtet sind, lässt sich für jedes Pixel der Beleuchtungsquelle ein voranstehend genannter Zusammenhang ermitteln, errechnen, und/oder abspeichern.

So kann jeder 2D-Koordinate jedes Pixels im aufgenommenen Bild, also z.B. jeder XY-Koordinate im von der Bildaufnahmevorrichtung 10 aufgenommenen Bild, eine 3D-Koordinate im Messbereich zugeordnet sein. Allgemein sind die 2D-Koordinaten im aufgenommenen Bild abhängig von der Position des jeweils beleuchteten Punktes des Objekts relativ zur Position der Bildaufnahmevorrichtung 10 und der Beleuchtungsquelle 20. Ein solcher Zusammenhang kann zumindest für diejenigen Objektpunkte vorbestimmt und/oder abgespeichert werden, die sich im Messbereich befinden. Mathematisch ausgedrückt kann als vorbekannte Relation der Bildaufnahmevorrichtung 10 zur Beleuchtungsquelle 20 für jeden Pixel p der Beleuchtungsquelle eine Zuordnungsfunktion $f_p$ der folgenden Form vorgespeichert werden:

$$f_p(x,y) \mapsto (x',y',z') \,.$$

Hierbei sind die Koordinaten *(x, y)* 2D-Koordinaten desjenigen Punktes im aufgenommenen Bild, der vom Pixel p beleuchtet wird. Die 2D-Koordinaten *(x, y)* können hierbei auch die Koordinaten eines Mittelpunkts eines von dem Pixel p im aufgenommenen Bild beleuchteten Bereichs sein. Die Koordinaten *(x', y', z')* sind 3D-Koordinaten desjenigen Ortes und/oder Punktes im Messbereich, der vom Pixel p beleuchtet ist und der dabei den beleuchteten Punkt und/oder Bereich im aufgenommenen Bild verursacht.

Die Zuordnungsfunktion $f_p$ kann für jedes Pixel p oder eine Mehrzahl von Pixel p der Beleuchtungsquelle 20 in Form einer mathematischen Funktion und/oder in Form einer Zuordnungstabelle in einem Speichermodul der Vorrichtung vorgespeichert sein.

Somit kann durch Bestimmung desjenigen Pixels der Beleuchtungsquelle 20, das einen detektierten der vorbestimmten Punkte des Objekts 105 beleuchtet, die 3D-Koordinate des so beleuchteten und/oder markierten Punktes des Objekts 105 ermittelt werden. Mit anderen Worten kann bei Durchführung des Verfahrens z.B. ermittelt werden, welches Pixel der Beleuchtungsquelle 20 den im Bild detektierten, vorbestimmten Punkt beleuchtet. Daraus kann die zugehörige 3D-Koordinate entweder mittels Triangulation berechnet werden oder über die voranstehend beschriebene Zuordnungsfunktion. Das Ermitteln der 3D-Koordinaten kann automatisch aus denjenigen Bilddaten erfolgen, die dem von der Bildaufnahmevorrichtung 10 aufgenommenen Bild zugeordnet sind und/oder entsprechen.

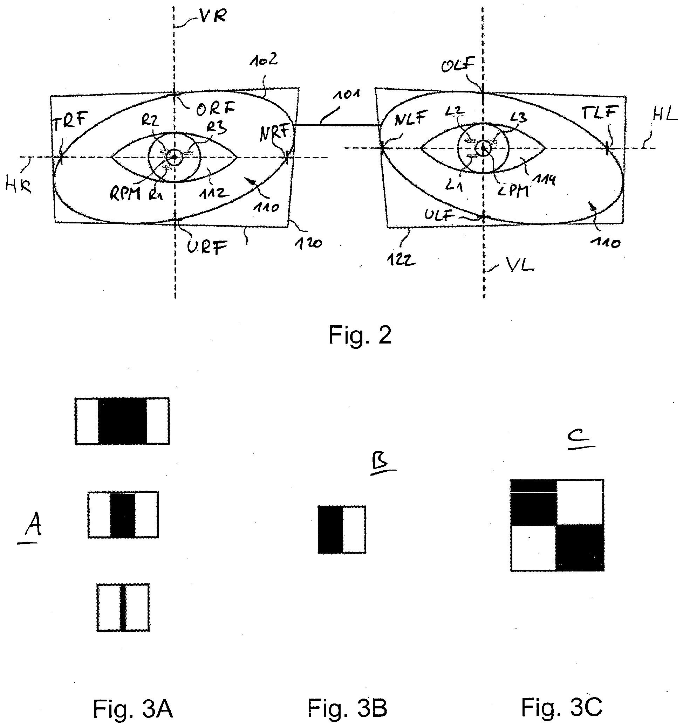

Fig. 2 zeigt in einer schematischen Darstellung ein Bild, das von der Bildaufnahmevorrichtung 10 aufgenommen und erzeugt worden ist. Im gezeigten Ausführungsbeispiel sind die Bilddaten einer schematisch dargestellten Frontaufnahme eines Teilbereichs des Kopfes eines Benutzers 100 mit in Gebrauchsstellung angeordneter Brillenfassung gezeigt. Hierbei sind in der Figur 2 lediglich zwei Brillengläser 110, eine Brillenfassung 101, ein rechtes Auge 112 und ein linkes Auge 114 des Benutzers 100 dargestellt. Als vorbestimmte Punkte sind in Fig. 2 ein rechter Pupillenmittelpunkt RPM des rechten Auges 112 und ein linker Pupillenmittelpunkt LPM des linken Auges 114 gezeigt. Ferner zeigt Fig. 2 eine Begrenzung 120 des rechten Brillenglasrands bzw. Brillenfassungsrands 102 um das rechte Auge 112 und eine Begrenzung 122 des linken Brillenglasrands bzw. Brillenfassungsrands 102 um das linke Auge 114 im Kastenmaß. Weiterhin sind ein nasaler rechter Fassungspunkt NRF und ein temporaler rechter Fassungspunkt TRF einer im Bezugssystem des Benutzers 100 horizontalen Ebene HR mit dem Brillenfassungsrand 102 bezüglich des rechten Auges 112 gezeigt. In Fig. 2 ist zudem ein oberer rechter Fassungspunkt ORF und ein unterer rechter Fassungspunkt URF einer im Bezugssystem des Benutzers 100 vertikalen Ebene VR senkrecht zu der horizontalen Ebene HR des Benutzers 100 mit dem Brillenfassungsrand 102 bezüglich des rechten Auges 112 gezeigt.

Analog dazu sind ist ein nasaler linker Fassungspunkt NLF und ein temporaler linker Fassungspunkt TLF einer im Bezugssystem des Benutzers 100 horizontalen Ebene HL mit dem Brillenfassungsrand 102 bezüglich des linken Auges 114 gezeigt. In Fig. 2 ist zudem ein oberer linker Fassungspunkt OLF und ein unterer linker Fassungspunkt ULF einer im Bezugssystem des Benutzers 100 vertikalen Ebene VL senkrecht zu der horizontalen Ebene HL des Benutzers 100 mit dem Brillenfassungsrand 102 bezüglich des linken Auges 114 gezeigt.

Figur 2 zeigt Punkte des Systems bestehend aus dem Kopf des Benutzers 100 und der daran in Gebrauchsstellung angeordneten Brillenfassung 101. Zur Bestimmung von optischen Parametern, die zur Fertigung und/oder Berechnung von individuellen Brillengläsern, insbesondere individuellen ophthalmischen Brillengläsern verwendet werden können, werden in diesem System die 3D-Koordinaten vorbestimmter Punkte ermittelt. Gemäß einer Ausführungsform werden hierbei die 3D-Koordinaten der folgenden zehn Punkte ermittelt:

- rechter Pupillenmittelpunkt RPM,
- linker Pupillenmittelpunkt LPM,
- temporaler rechter Fassungspunkt TRF und temporaler linker Fassungspunkt TLF,
- nasaler rechter Fassungspunkt NRF und nasaler linker Fassungspunkt NLF,
- oberer rechter Fassungspunkt ORF und oberer linker Fassungspunkt OLF, und
- unterer rechter Fassungspunkt URF und unterer linker Fassungspunkt ULF.

Aus den 3D-Koordinaten der vorgenannten zehn Punkte als vorbestimmte Punkte können die wichtigsten optischen Parameter ermittelt werden.

Beim Verfahren werden hierbei die vorbestimmten Punkte gezielt von dem von der Beleuchtungsquelle 20 projizierten Muster markiert. Dabei können insbesondere die acht Fassungspunkte, nämlich die Punkte ORF, NRF, URF, TRF, OLF, TLF, ULF und NLF dadurch markiert werden, dass sich im aufgenommenen Bild eine Kontrastkante des Musters winklig mit dem Brillenfassungsrand (und/oder Brillenglasrand) 102 schneidet. Der Schnittwinkel kann insbesondere ein im Wesentlichen rechter Winkel sein, und/oder ein Schnittwinkel zwischen etwa 30° und etwa 150° sein, um den jeweiligen Fassungspunkt im Bild deutlich zu markieren.

Eine solche Kontrastkante des projizierten Musters kann z.B. durch einen Strich bereitgestellt werden, der gezielt durch den jeweiligen Fassungspunkt ORF, NRF, URF, TRF, OLF, TLF, ULF und/oder NLF gelegt wird. Zum Beispiel könnte jeweils ein Strich entlang der vertikalen Ebenen VR und VL sowie jeweils ein Strich durch die horizontalen Ebenen HR und HL auf das Auge projiziert werden, um die acht Fassungspunkte gezielt zu markieren. Die so auf das Objekt 105 projizierten Linien können z.B. lediglich ein einziges Pixel breit ausgebildet sein, um eine möglichst genaue und gezielte Markierung der vorbestimmten Punkte zur ermöglichen. Als Muster kann jedoch auch eine Kontrastkante zwischen einem unbeleuchteten und einem beleuchteten Bereich des Musters verwendet werden.

Zur Detektion und Markierung der beiden Pupillenmittelpunkte LPM und RPM kann eine indirekte Ermittlung der zugehörigen 3D-Koordinaten erfolgen. Da die menschliche Pupille biologisch dazu vorgesehen ist, einen Großteil des sichtbaren Lichts ins Innere des Auges zu leiten und nicht zu reflektieren, kann es technische Schwierigkeiten bei der Markierung des Pupillenmittelpunktes mittels eines Merkmals des Musters geben. Deswegen können die 3D-Koordinaten der Pupillenmittelpunkte LPM und RPM in manchen Fällen nicht wie die Fassungsrandpunkte direkt ermittelt werden. Im Rahmen des Verfahrens werden deshalb nicht die Pupillenmittelpunkte selber von einem Merkmal des projizierten Musters direkt markiert, sondern statt dessen zu den Pupillenmittelpunkten LPM, RPM benachbarte Punkte, z.B. Punkte auf der Iris des jeweiligen rechten oder linken Auges 112 und 114.

In Figur 2 sind anstelle des rechten Pupillenmittelpunkts RPM drei Irispunkte mit den Merkmalen R1, R2 und R3 des Musters markiert, die benachbart zum rechten Pupillenmittelpunkt RPM auf der Iris des rechten Auges 112 angeordnet sind. Zunächst können diese drei Irispunkte durch die Merkmale R1, R2 und R3 des Musters als vorbestimmte Punkte des Objekts 105 markiert werden. Anschließend können die 3D-Koordinaten der drei zugehörigen Irispunkte wie voranstehend beschrieben ermittelt werden. Die 3D-Koordinaten des rechten Pupillenmittelpunktes RPM können daran anschließend aus den 3D-Koordinaten der drei benachbarten Irispunkte ermittelt werden. Die 3D-Koordinaten können z.B. als ein Mittelwert der 3D-Koordinaten der drei Irispunkte ermittelt werden, insbesondere in Abhängigkeit einer Geometrie der drei Irispunkte zueinander auf dem rechten jeweiligen Auge.

Analog dazu ist in Figur 2 auch nicht der linke Pupillenmittelpunkt LPM direkt durch ein Merkmal des Musters markiert, sondern lediglich drei Punkte auf der Iris des linken Auges 114, die zum linken Pupillenmittelpunkt LPM benachbart angeordnet sind. Diese drei Punkte sind durch die drei Merkmale L1, L2, und L3 des Musters markiert. Deren 3D-Koordinaten können wie voranstehend beschrieben ermittelt werden. Die 3D-Koordinaten des linken Pupillenmittelpunkts LPM können in Abhängigkeit von den 3D-Koordinaten dieser drei Irispunkte ermittelt werden.

**Figuren 3A, 3B und 3C** zeigen drei unterschiedlich projizierte Muster A, B und C mit stark ausgeprägten Kontrastkanten. Die dunkel dargestellten Teilbereiche in den Mustern A, B, C sind dabei unbeleuchtet, während die hell dargestellten Teilbereiche von der Beleuchtungsquelle 20 beleuchtet sind. Die Muster A, B und C können somit als einfarbige Muster ausgebildet sein, die z.B. ausschließlich aus unbeleuchteten und (z.B. mit einer einzigen Farbe) beleuchteten Teilbereichen bestehen, die jeweils mittels Kontrastkanten gegeneinander abgegrenzt sind. Die Kontrastkanten sind dabei zumindest abschnittsweise im Wesentlichen geradlinig ausgebildet. Geradlinige Abschnitte der Kontrastkanten bilden Merkmale des Musters A, B, C die besonders gut zum markieren vorbekannter Punkte geeignet sind.

Das z.B. einfarbige Licht kann hierbei Licht etwa einer einzigen, bestimmten Wellenlänge sein, oder aber aus Licht unterschiedlicher Wellenlängen zusammengesetzt sein, wie z.B. weißes Licht. Insbesondere kann das Licht auch in einem Wellenlängenbereich abgestrahlt werden, der vom Benutzer 100 nicht registriert wird und diesen daher nicht blendet, wie z.B. im infraroten Bereich.

Das Muster wird in zumindest einer Farbe, mit zumindest einer Wellenlänge und/oder in zumindest einem Wellenlängenbereich in den Messbereich projiziert, die in dem von der Bildaufnahmevorrichtung 10 aufgenommenen Bild erkannt und/oder detektiert werden kann, also in den Bilddaten detektierbar enthalten ist. Die verwendete Bildaufnahmevorrichtung 10 ist somit sensitiv in dem von der Beleuchtungsquelle 20 verwendeten Wellenlängenbereich.

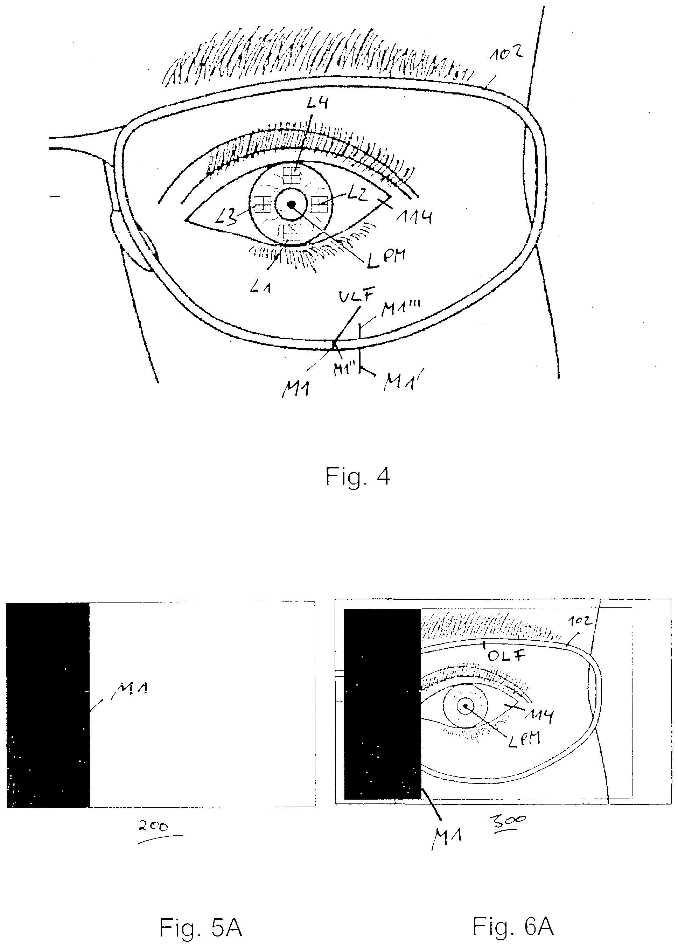

**Figur 4** zeigt in einer schematischen Darstellung lediglich eine Hälfte des von der Bildaufnahmevorrichtung 10 aufgenommenen Bildes. In den gezeigten Bilddaten ist nur das linke Auge 114 des Benutzers 100 gezeigt, das vom linken Brillenfassungsrand 102 umgrenzt ist. Die gesamte Aufnahme kann analog hierzu auch die rechte Pupille sowie das rechte Auge 112 des Benutzers 100 enthalten, das vom rechten Brillenfassungsrand 102 umgrenzt ist. Allgemein ist der Kopf des Benutzers 100 bevorzugt so im Messbereich angeordnet, dass in den von der Bildaufnahmevorrichtung 10 angefertigten Bilddaten beide Augen 112 und 114 des Benutzers 100 vollständig und frontal abgebildet sind, die jeweils vollständig vom Brillenfassungsrand bzw. Brillenglasrand 102 umgrenzt sind.

Figur 4 zeigt insbesondere den linken Pupillenmittelpunkt LPM als Mittelpunkt von vier Irispunkten des linken Auges 114, die von vier Merkmalen L1, L2, L3 und L4 des von der Beleuchtungsquelle 20 emittierten Musters markiert sind. Jedes der Merkmale L1 bis L4 weist zumindest zwei gekreuzte Linien auf, deren Schnittpunkt einen Irispunkt auf der Iris des linken Auges 114 markieren. Mit Hilfe der vorbekannten Relation der Bildaufnahmevorrichtung 10 zur Beleuchtungsquelle 20 können die 3D-Koordinaten der zugehörigen vier Punkte auf der Iris des Benutzers 100 ermittelt werden. Die 3D-Koordinaten des linken Pupillenmittelpunkts LPM können in Abhängigkeit davon ermittelt werden, insbesondere als ein Mittelwert der 3D-Koordinaten der vier Irispunkte. Zudem kann diejenige Koordinate(n), die den Abstand von der Bildaufnahmevorrichtung 10 angibt bzw. angeben, auf Basis vorbekannter Messdaten korrigiert werden. Diese vorbekannten Messdaten können berücksichtigen und/oder miteinberechnen, dass der Augapfel an sich rund ausgebildet ist und der Pupillenmittelpunkt deswegen relativ zu den markierten Irispunkten nach außen hin versetzt ist, z.B. in Richtung zur Bildaufnahmevorrichtung 10 hin.

Allgemein können die 3D-Koordinaten eines Pupillenmittelpunkts dadurch ermittelt werden, dass zunächst die 3D-Koordinaten zumindest zweier benachbarter Punkte ermittelt werden (z.B. von Irispunkten auf der Iris desselben Auges), aus denen die 3D-Koordinaten des Pupillenmittelpunkts ermittelt werden. Wie in Figur 2 gezeigt kann dies unter Zuhilfenahme von entweder drei Irispunkten erfolgen, oder aber wie in Figur 4 gezeigt unter Zuhilfenahme von zumindest vier Irispunkten.

Figur 4 zeigt weiterhin ein Merkmal M1 des von der Beleuchtungsquelle emittierten Musters. Das Merkmal M1 ist als ein im Wesentlichen vertikal angeordneter Strich des Musters der Beleuchtungsquelle 20 ausgebildet, das im Wesentlichen senkrecht auf einer Verlaufsrichtung des Brillenfassungsrands 102 steht. Da der Brillenfassungsrand 102 näher an der Bildaufnahmevorrichtung 10 angeordnet ist als das dahinter angeordnete Gesicht des Benutzers 100, beleuchtet das Merkmal M1 in den in der Figur 4 gezeigten Bilddaten mehrere, lateral zueinander versetzte Merkmalsabschnitte M1', M1" und M1'''. So sind die beiden Merkmalsabschnitte M1' und M1''', die im Bild das Gesicht des Benutzers 100 beleuchten, lateral versetzt zum Merkmalsabschnitt M1", der im Bild einen Abschnitt des Brillenfassungsrands 102 beleuchtet. Alle drei Merkmalsabschnitte M1', M1" und M1''' sind in den Bilddaten als jeweils im Wesentlichen vertikale Linien gezeigt. Durch den räumlichen Versatz des Brillenfassungsrands 102 zum dahinter liegenden Gesicht des Benutzers 100 weist das Merkmal des Musters in den Bilddaten zwei Sprünge auf, nämlich oberhalb des Merkmalsabschnitts M1' auf dem Gesicht zum Merkmalsabschnitt M1" auf dem Brillenfassungsrand 102 und oberhalb davon wieder zurück auf das Gesicht, nämlich zum Merkmalsabschnitt M1'''. Als vorbestimmter Punkt kann durch die gezielte Markierung mit dem Merkmal M1 des Musters ermittelt werden, welche Koordinaten der untere linke Fassungspunkt ULF aufweist. Dazu kann in einem Zwischenschritt ermittelt werden, welche Pixel der Beleuchtungsquelle 20 den Merkmalsabschnitt M1'' beleuchten und welche Zuordnungsfunktion $f_p$ diesen Pixeln zugeordnet ist.

**Figur 5A** zeigt ein erstes Muster 200, das von der Beleuchtungsquelle 20 in den Messbereich projiziert wird, insbesondere entlang der Beleuchtungsrichtung 21. Das erste Muster 200 weist lediglich einen im Wesentlichen rechteckigen beleuchteten Teilbereich auf und einen ebenfalls im Wesentlichen rechteckigen unbeleuchteten Teilbereich. Zwischen dem beleuchteten Teilbereich und dem unbeleuchteten Teilbereich des ersten Musters 200 ist ein Merkmal M1 des ersten Musters 200 angeordnet. Das Merkmal M1 ist als eine Kontrastkante, insbesondere als eine zumindest abschnittsweise geradlinig ausgebildete Kontrastkante, ausgebildet. Mit dem gradlinigen Abschnitt der Kontrastkante des Merkmals M1 kann ein vorbestimmter Punkt des Objekts 105 markiert werden.

**Figur 6A** zeigt in einer schematischen Darstellung ein erstes Bild 300, das von der Bildaufnahmevorrichtung 10 aufgenommen ist. In diesem ersten Bild ist lediglich ein Auge des Benutzers 100 enthalten, nämlich das linke Auge 114. Alternativ hierzu könnte das Bild auch beide jeweils vom Brillenfassungsrand (und/oder Brillenglasrand) 102 umrandeten Augen des Benutzers enthalten. Das so aufgenommene erste Bild 300 zeigt, wie das erste Muster 200 der Beleuchtungsquelle 20 einen Teilbereich des Gesichts des Benutzers 100 und der daran in Gebrauchsstellung angeordneten Brillenfassung 101 beleuchtet. Hierbei ist zu beachten, dass die in Figur 6A gezeigte Darstellung lediglich schematisch ist. In realistischen Aufnahmen wäre die Kontrastkante, also das Merkmal M1, nicht mehr durchgehend geradlinig ausgebildet, sondern abhängig von der Oberflächenstruktur des beleuchteten Objekts, also des Gesichts des Benutzers 100 sowie des Brillenfassungsrands 102. Aus Gründen der einfacheren Darstellung ist in den Figuren jedoch nur diese schematische Darstellung angezeigt, in der das Merkmal M1 weiterhin geradlinig dargestellt ist.

Bei der Durchführung des Verfahrens zur Ermittlung der 3D-Koordinaten vorbestimmter Punkte werden im aufgenommenen ersten Bild 300 zunächst die vorbestimmten Punkte ermittelt, für die die 3D-Koordinaten detektiert werden sollen. Beispielhaft für diese vorbestimmten Punkte sind in Figur 6A der linke Pupillenmittelpunkt LPM und der obere linke Fassungspunkt OLF gezeigt. Die vorbestimmten Punkte können automatisch in den Bilddaten des ersten Bildes 300 detektiert werden, insbesondere Software-gestützt. In den Bilddaten des ersten Bildes 300 können die vorbestimmten Punkte entweder mittels Bildverarbeitung und/oder mittels einer manuellen Auswahl detektiert werden. Vorbestimmte Punkte können dabei insbesondere die voranstehend genannten Fassungspunkte und Pupillenmittelpunkte sein, aber auch Augenwinkel, Mundwinkel, usw.

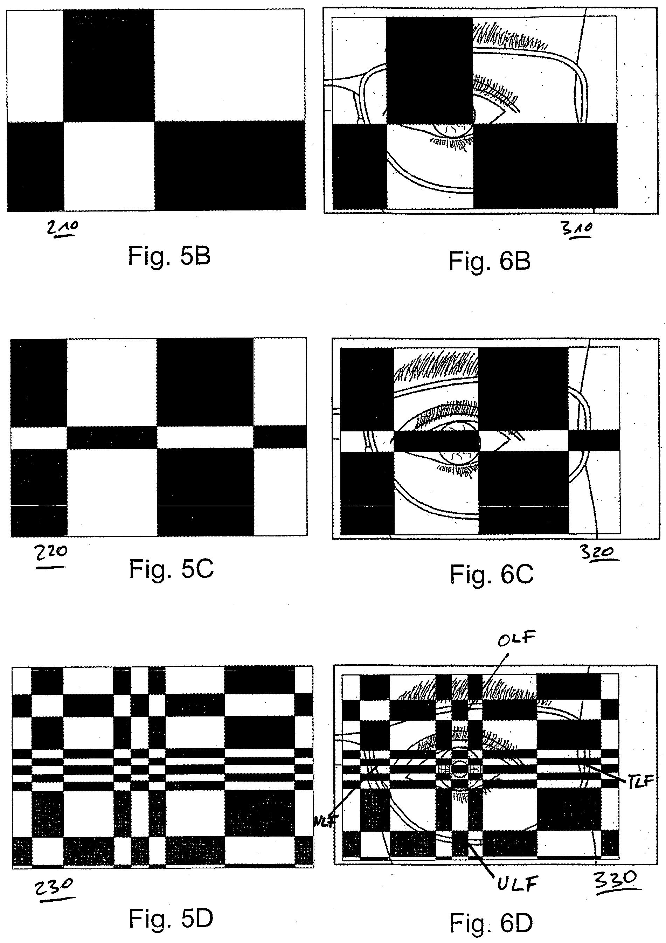

Die vorbestimmten Punkte werden in darauffolgenden Bildern, die z.B. in den nachfolgend beschriebenen Figuren 6B, 6C und 6D gezeigt sind, erneut detektiert. Hierbei ist es vorteilhaft, wenn nachfolgende Bilder möglichst schnell hintereinander erstellt werden, z.B. mehrere Bilder pro Sekunde. Bevorzugt werden die Bilder hintereinander mit einer Wiederholfrequenz von zumindest 10 Hz erstellt, besonders bevorzugt von zumindest 20 Hz.

Die Beleuchtungsquelle 20 wird als ein Projektor verwendet, mit dem ein variables Muster auf das im Messbereich angeordnete Objekt projiziert wird. Zunächst wird das erste Muster 200 von der Beleuchtungsquelle 20 auf das Gesicht des Benutzers 100 projiziert. Das erste Muster 200 wird insbesondere mit den vorbestimmten Punkten des Objekts 105 überlagert. In den Bilddaten des ersten Bildes 300 wird überprüft, ob einer oder alle der vorbestimmten Punkte von einem Merkmal des ersten Musters 200 markiert sind. Wie in Figur 6A gezeigt, ist jedoch keiner der vorbestimmten Punkte von dem Merkmal M1 des ersten Musters 200 markiert. Dies bedeutet, dass in den Bilddaten des ersten Bildes 300 keines der Merkmale des ersten Musters 200 mit einem der vorbestimmten Punkte zusammenfällt. Insbesondere verläuft der geradlinige Abschnitt der Kontrastkante des Merkmals M1 nicht durch einen der vorbestimmten Punkte sondern ist beabstandet von diesem angeordnet. Deswegen werden die 3D-Koordinaten der vorbestimmten Punkte noch nicht aus den Bilddaten des ersten Bildes 300 berechnet.

**Figur 5B** zeigt ein zweites Muster 210, das ebenfalls von der Beleuchtungsquelle 20 abgestrahlt wird. Nachdem wie voranstehend beschrieben festgestellt wird, dass im ersten Bild 300 die vorbestimmten Punkte nicht alle durch ein Merkmal des ersten Musters 200 markiert sind, erfolgt eine Iteration des Verfahrens mit variiertem Muster. Hierbei kann das zweite Muster 210 aus einer Variation des ersten Musters 200 generiert werden. Bei der Variation wird z.B. ein im ersten Muster 200 unbeleuchteter Teilbereich (in Fig. 5A links gezeigt) zweigeteilt in zwei im Wesentlichen rechteckige neue Teilbereiche des zweiten Musters 210, von denen einer beleuchtet und der andere unbeleuchtet ausgebildet ist.

Der größere (in Fig. 5A rechts gezeigte) und beleuchtete Teilbereich des ersten Musters 200 wurde im zweiten Muster 210 viergeteilt, nämlich in vier im Wesentlichen rechteckige neue Teilbereiche des zweiten Musters 210. Von diesen vier im Wesentlichen rechteckigen neuen Teilbereichen sind im zweiten Muster 210 zwei beleuchtet und zwei unbeleuchtet. Insgesamt weist das zweite Muster 210 drei beleuchtete und drei unbeleuchtete, im Wesentlichen rechteckige Flächen auf. Dabei sind aneinandergrenzende Teilbereiche und/oder Flächen immer abwechselnd beleuchtet und unbeleuchtet. Deswegen ergeben sich zwischen den besagten beleuchteten und unbeleuchteten Teilbereichen/Flächen Kontrastkanten, die als Merkmale des Musters zur Markierung von vorbestimmten Punkten des Objekts 105 geeignet sind. Alle diese Kontrastkanten weisen zumindest abschnittsweise einen im Wesentlichen geradlinigen Bereich auf, mit dem die vorbestimmten Punkte markiert werden können.

Insgesamt können die von der Beleuchtungsquelle 20 projizierten Muster im Wesentlichen schachbrettartig ausgebildet. Das bedeutet, dass die Muster ausschließlich im Wesentlichen rechteckige Teilbereiche und/oder Teilflächen aufweisen, die entweder vollflächig beleuchtet oder unbeleuchtet sind. Weiterhin sind die Teilbereiche in eine vertikale und/oder in eine horizontale Richtung abwechselnd beleuchtet und unbeleuchtet ausgebildet. Dadurch ergeben sich im Wesentlichen horizontal angeordnete und im Wesentlichen vertikal angeordnete Kontrastkanten als Merkmale des variablen Musters. Diese schachbrettartige Anordnung kann für sämtliche Muster gültig sein, die von der Beleuchtungsquelle 20 in den Messbereich projiziert werden. Hierbei können die einzelnen "Schachbrettfelder", also die beleuchteten und unbeleuchteten Teilbereiche bzw. Teilflächen des Musters, unterschiedlich dimensioniert sein, z.B. als Rechtecke.

Ein solches projiziertes Lichtmuster kann z.B. dadurch konstruiert werden, dass über die zweidimensionale Emissionsfläche bzw. Musterfläche im Wesentlichen senkrechte und im Wesentlichen vertikale Linien eingezeichnet werden, die im Wesentlichen rechteckige Felder ausbilden.

**Figur 6B** zeigt in einer schematischen Darstellung ein zweites Bild 310 des von der Brillenfassung 101 umrandeten linken Auges 114, auf das das zweite Muster 210 projiziert ist. Das zweite Bild 310 wird in Bilddaten umgewandelt, in denen wieder die vorbestimmten Punkte detektiert werden. Weiterhin und wiederum wird überprüft, ob alle vorbestimmten Punkte von jeweils einem Merkmal des zweiten Musters 210 markiert sind. Da dies auch im zweiten Bild 310 noch nicht der Fall ist, wird das Projektionsmuster in einem nächsten Schritt erneut variiert.

**Figur 5C** zeigt die erneute Variation anhand eines dritten Musters 220, in dem die Anzahl der schachbrettartig angeordneten beleuchteten und unbeleuchteten Teilbereiche und/oder Teilflächen des Musters weiter erhöht ist. Bei der Variation wurde sowohl die Anzahl der im Muster enthaltenen geometrischen Formen erhöht, als auch ihre Durchschnittsgröße reduziert. Dabei wird die Anzahl der Kontrastkanten des Musters erhöht. Bei der Variation wurde sowohl die Anzahl der im Wesentlichen vertikal ausgerichteten Trennlinien durch das Muster erhöht, als auch die Anzahl der im Wesentlichen horizontal durch das Muster verlaufenden Trennlinien zwischen den einzelnen Teilbereichen/Teilflächen des Musters.

**Figur 6C** zeigt in einer schematischen Darstellung ein drittes Bild 320 des von der Brillenfassung 101 umrandeten linken Auges 114 des Benutzers 100, auf das das in Figur 5C gezeigte dritte Muster 220 projiziert ist. Auch in diesem Bild wird überprüft, ob die vorbestimmten Punkte jeweils von einem Merkmal des dritten Musters 220 markiert sind. Fällt die Überprüfung negativ aus, wird das Muster weiter variiert.

**Figur 5D** zeigt in einer schematischen Darstellung ein viertes Muster 230, das auf einer Variation des dritten Musters 220 beruht. Das vierte Muster 230 ist dabei nicht zwingend direkt aus dem dritten Muster 220 direkt hervorgegangen. Zwischen der Generation des dritten Musters 220 und der Generation des vierten Musters 230 können weitere, in den Figuren nicht gezeigte Muster zur Aufnahme zusätzlicher Bilder generiert und in den Messbereich projiziert werden. Bei jeder Variation kann die Anzahl der Kontrastkanten des Musters erhöht werden, insbesondere in den Bereichen, in denen die vorbestimmten Punkte des Objekts 105 angeordnet sind.

**Figur 6D** zeigt in einer schematischen Darstellung ein viertes Bild 330 des von der Brillenfassung 101 umrandeten Auges, auf das das vierte Muster 230 projiziert ist. Wie in Figur 6D gezeigt, sind insbesondere die vier linken Fassungspunkte OLF, TLF, ULF und MLF jeweils durch ein Merkmal des vierten Musters 230 markiert. Hierbei ist jeweils eine Kontrastkante des vierten Musters 230 im Wesentlichen senkrecht zur Verlaufsrichtung der Brillenfassung 101 angeordnet. Ein Schnittpunkt zwischen der Brillenfassung 101 und dem jeweiligen Merkmal des vierten Musters 230 dient zur Markierung des jeweiligen vorbestimmten Punktes, also in diesem Fall des jeweiligen linken Fassungspunktes im vierten Bild 330. Aus dieser Markierung kann mit der vorbekannten Relation der Beleuchtungsquelle 20 zur Bildaufnahmevorrichtung 10 die jeweils zugehörige 3D-Koordinate des vorbestimmten Punktes ermittelt und/oder berechnet werden, z.B. mit Hilfe der jeweiligen Zuordnungsfunktionen $f_p$.

Bei der Variation des Musters kann die Kalibrierung des Aufbaus, also die vorbekannte Relation der Bildaufnahmevorrichtung 10 zur Beleuchtungsquelle 20 berücksichtigt und/oder genutzt werden. Da zunächst der Abstand der Vorrichtung zum Objekt 105 nicht bekannt ist, wird der Abstand iterativ durch Musterprojektion und einem Lokalisieren der Merkmale des jeweils projizierten Musters in dem jeweils aufgenommenen Bild ermittelt. Sind die vorbestimmten Punkte mit jeweils einem Merkmal des projizierten Musters überlagert, und können die einzelnen Merkmale des projizierten Musters im aufgenommenen Bild Elementen der Beleuchtungsquelle 20 zugeordnet werden, also z.B. ihrem jeweiligen Pixel bzw. Pixeln, kann eine ausreichend genaue Bestimmung der 3D-Koordinaten der einzelnen, vorbestimmten Punkte des Objekts 105 erfolgen. Dabei können alle 3D-Koordinaten anhand eines einzigen Bildes berechnet werden, nämlich des zuletzt aufgenommenen Bildes, im Ausführungsbeispiel anhand des vierten Bildes 330. Eine Lösung des Korrespondenzproblems, also das Auffinden zueinander korrespondierender Punkte in zwei Aufnahmen, die aus unterschiedlichen Aufnahmerichtungen erstellt wurden, entfällt.

Mit anderen Worten ist die Vorrichtung dazu ausgebildet und vorgesehen, eine aktive und adaptive Videozentrierung durchzuführen, wobei ein projiziertes Muster variiert wird und sozusagen nachgeführt wird zu den vorbestimmten Punkten des Objekts 105. Durch die Nachführung der Projektion wird eine Steigerung der Ortsauflösung in aufeinander folgenden Aufnahmen, also aufgenommenen Bildern, erzielt. Hierbei können stabile Methoden der strukturierten Beleuchtung basierend auf Mustersequenzen eingesetzt werden.

Zur Detektion der vorbestimmten Punkte im Bild sowie zur Überprüfung, ob die jeweiligen vorbestimmten Punkte durch ein Merkmal des projizierten Musters markiert sind, können in der Bildverarbeitung bekannte Methoden eingesetzt werden. Für eine Gesichtserkennung und/oder Lokalisierung von Merkmalen des Gesichts, also zum Detektieren der vorbestimmten Punkte, können Kaskadenklassifikatoren verwendet werden (wie z.B. im Artikel "Fast Multi-view Face Detection" von M. Jones und P. Viola näher beschrieben) oder Deskriptorvektoren, bei denen zunächst Key Points ermittelt werden, die durch einen Deskriptor beschrieben werden, um dann im Vergleich mit einem Referenzdeskriptor eine Übereinstimmung zu ermitteln. Zu den Deskriptoren zählen zum Beispiel FAST, FREAK, BRISK, etc. Diese Verfahren sind dem Fachmann grundsätzlich bekannt.

Auch eine Bewegung des Benutzers 100, also eine Bewegung des Objekts 105, in aufeinanderfolgend aufgenommenen Bildern kann durch Key Points ermittelt werden und in dem Verfahren berücksichtigt werden. Alternativ oder zusätzlich kann auch eine Berechnung eines optischen Flusses erfolgen, um die Bewegung nachzuverfolgen und für nachfolgende Musterprojektionen zu berücksichtigen.

Durch die Berücksichtigung der Bewegung des Objekts und die vollständige Bestimmung aller 3D Koordinaten aus einer einzigen Aufnahme können Artefakte ausgeschlossen werden, die ansonsten in einer Sequenz von aufeinander folgenden, strukturiert beleuchteten Aufnahmen auftreten und das Ergebnis verfälschen können.

Als Projektionsmuster und/oder Lichtmuster, das von der Beleuchtungsquelle 20 abgestrahlt wird, kann auf eine Vielzahl von Mustern zurückgegriffen werden, die als strukturierte Beleuchtung des Messbereichs verwendet werden können. Beim Verfahren wird keine dichte und/oder vollständige 3D-Rekonstruktion des Messobjekts bzw. von dessen Oberfläche angestrebt, sondern lediglich die Ermittlung einzelner vorbestimmter Punkte, z.B. bis zu 100 solcher Selektionspunkte, bevorzugt bis zu 50 solcher Selektionspunkte, besonders bevorzugt von 8 bis 12 Selektionspunkte. Deswegen kann als ein erstes Muster in einem ersten Schritt ein großflächiges weitgehend unstrukturiertes Muster projiziert werden. Falls oder sobald der zumindest eine vorbestimmte Punkt innerhalb des projizierten Musters angeordnet ist, kann mit einer Sequenz zur Erhöhung der Ortsauflösung des Musters begonnen werden, also mit der Variation des projizierten Musters. Dies ist normalerweise dann der Fall, wenn der zumindest eine vorbestimmte Punkt im Messbereich angeordnet wird. Das bzw. die Muster kann/können so ausgebildet sein, dass es/sie im Wesentlichen den gesamten Messebereich überlagern.

Als mögliche Variationssequenzen eigenen sich z.B. binäre Codes und/oder grey Codes. Solche Codes sind z.B. im Artikel "Structured-light 3D surface imaging: a tutorial" von J. Geng näher erläutert.

Obwohl eine statische Verwendung von Farben zur Codierung auf den ersten Blick ungünstig erscheint, da die Vielfalt an Brillenfassungen eine ebenso große Farbvielfalt mit sich bringt, kann das projizierte Muster zusätzlich auch farbig codiert sein. So könnte zum Beispiel eine jeweils zum Untergrund komplementäre Farbe des Musters ausgewählt werden, insbesondere zur Markierung der Brillenfassung. Dadurch wird der Kontrast im aufgenommenen Bild weiter erhöht, was die Bestimmung der 3D-Koordinaten der vorbestimmten Punkte verbessern kann.

Zur Markierung von Elementen mit einer kleinen physikalischen Ausdehnung, also zum Beispiel zur Markierung des Fassungsrands von Metallbrillen, kann eine eindimensionale Sequenz von Mustern verwendet werden, also zum Beispiel ein Streifenmuster. Hierbei wird der vorbestimmte Punkt auf dem Fassungsrand gezielt von einer Kontrastkante des Streifenmusters markiert. Allgemein sollten Kontrastkanten des projizierten Musters einen vergleichsweise großen Schnittwinkel mit der größten Ausdehnung der Umgebung des vorbestimmten Punktes aufweisen. So kann z.B. eine im Wesentlichen geradlinige Kontrastkante im Bild im Wesentlichen senkrecht auf der Verlaufsrichtung des jeweiligen Abschnitts des Fassungsrandes stehen. In diesem Fall kann eine Detektion und/oder Lokalisierung des vorbestimmten Punktes dadurch ermöglicht werden, dass eine Ausdehnung desjenigen Objektelements, auf dem der vorbestimmte Punkt angeordnet ist, in eine andere Richtung verläuft als diejenige Richtung in der die Kontrastkante des Musters angeordnet ist. Hierbei wird im Bild eine Diskontinuität der Kontrastkante im aufgenommenen Bild aufgenommen, wie z.B. bei den Merkmalsabschnitten M1', M1'' und M1''' des Merkmals M1 in Figur 4 gezeigt.

Die vorbestimmten Punkte sind dabei Punkte eines Objektelements und/oder Objektmerkmals, wie z.B. Punkte auf oder an dem Brillenfassungs- und/oder Brillenglasrand. Ebenso können Punkte wie z.B. der Pupillenmittelpunkt als Selektionspunkt der zugehörigen Pupille als Objektelement und/oder Objektmerkmal vorbestimmt sein.

Wie voranstehend beschrieben kann zur Ermittlung der 3D-Koordinaten der Pupillenmittelpunkte aufgrund einer fehlenden Rückreflektion des projizierten Musters auf eine Mittelung der 3D-Koordinaten mehrerer umliegender Punkte zurückgegriffen werden.

Die Ermittlung der 3D-Koordinaten der vorbestimmten Punkte kann parallel zueinander, also kaskadierend hin zu einem einzigen Bild, oder zeitlich aufeinander folgend erfolgen. Hierbei können vorbestimmte Punkte, die räumlich nahe beieinander liegen, aber zum Beispiel aufgrund von Diskontinuitäten in dem Muster nicht eindeutig identifiziert werden konnten, nacheinander detektiert werden, um Mehrdeutigkeiten zu vermeiden. Diese nacheinander ermittelten 3D Punkte können anderen 3D Punkten über 3D Punkte, die in mehreren Bildern ermittelt werden, zugeordnet werden.

Die Projektion des Musters kann zum Beispiel dadurch verbessert werden, dass die Reflektivität an den vorbestimmten Punkten und/oder globale Belichtungseffekte berücksichtigt werden.

Beim Verfahren ist keine Verrechnung nacheinander aufgenommener Bilder erforderlich. Eine solche Verrechnung kann vollständig unterlassen werden. Zwar können nacheinander aufgenommene Bilder zur Berechnung einer Objektbewegung vergleichend betrachtet werden, insbesondere zur Berechnung eines optischen Flusses in den aufgenommenen Bildern; jedoch kann hierbei eine einzige, normale Digitalkamera (im Gegensatz zu einer 3D-Kamera) als Bildaufnahmevorrichtung verwendet werden. Insbesondere kann und/oder muss zur Berechnung der 3D-Koordinaten lediglich ein einziges, zweidimensionales Bild ausgewertet werden, im Gegensatz zu Verfahren, bei denen mehrere Bilder (z.B. mit phasenverschobenen Muster) miteinander verglichen werden, oder 3D-Kameras verwendet werden.

Die voranstehend beschriebene Videozentrierung kann zum Beispiel auch im dentalen oder orthopädischen Bereich verwendet werden, bei denen modellbasierte Oberflächen oder Körper verwendet werden, die eine definierte Anzahl von Parametern zu deren Beschreibung aufweisen.

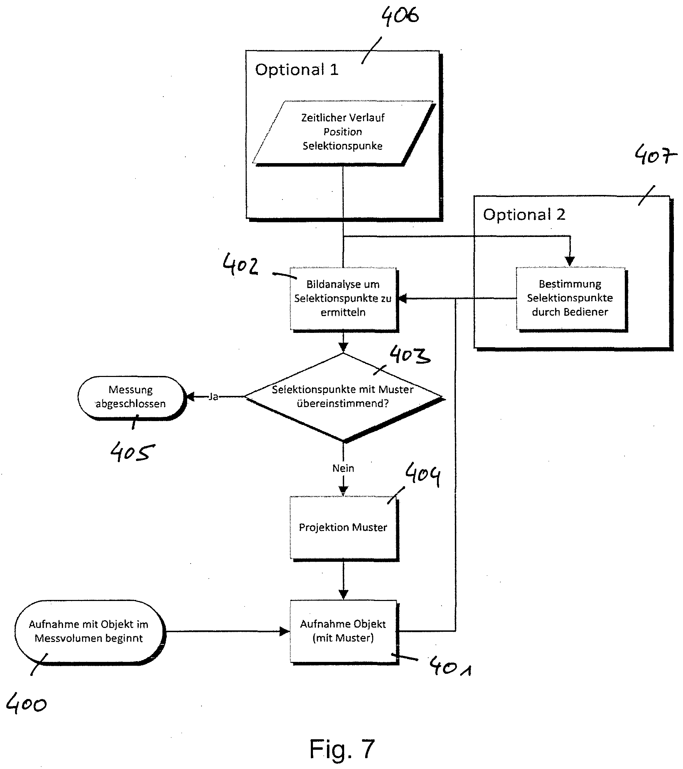

**Figur 7** zeigt in einem Flussdiagramm Schritte eines Verfahrens zur Bestimmung von 3D-Koordinaten vorbestimmter Punkte eines Objekts. Hierbei zeigt das Flussdiagramm insbesondere Schritte, die von einem Computerprogrammprodukt durchgeführt werden können.

Zu Beginn wird im Schritt 400 das Objekt in den Messbereich eingebracht, der zum Beispiel als ein wohldefiniertes Messvolumen ausgebildet sein kann. Es wird ein Startmuster als ein erstes Muster ausgewählt (vgl. auch Schritt 404), das auf das Objekt projiziert wird. In Schritt 401 wird ein Bild des Objekts aufgenommen, auf das das Startmuster projiziert ist.

Das aufgenommene Bild, oder genauer die digitalen Bilddaten des aufgenommenen Bildes, werden anschließend in einem Schritt 402 analysiert. In diesem Schritt erfolgt eine Bildanalyse der Bilddaten, um die vorbestimmten Punkte im aufgenommenen Bild zu detektieren. Die vorbestimmten Punkte sind in dem in Figur 7 gezeigten Flussdiagramm als Selektionspunkte bezeichnet. Allgemein sind diese Selektionspunkte einzelne, ausgewählte und vorbestimmte Punkte des Objekts, deren 3D-Koordinaten ermittelt werden sollen.

Anschließend an die Bildanalyse 402 werden in einem Schritt 403 die einzelnen Selektionspunkte in den Bilddaten daraufhin überprüft, ob sie jeweils mit einem Merkmal des Musters markiert sind. Ist dies noch nicht der Fall, wird in Schritt 404 das projizierte Muster variiert und das variierte Muster auf das Objekt im Messbereich projiziert. Es folgt in Schritt 401 die Aufnahme eines erneuten Bildes des Objekts, auf das das variierte Muster projiziert ist. Das Verfahren wird solange iteriert, bis in Schritt 403 festgestellt wird, dass alle Selektionspunkte mit einem Merkmal des Musters markiert sind. Daraufhin kann in Schritt 405 die Messung abgeschlossen werden und aus dem zuletzt aufgenommenen Bild bzw. den zugehörigen Bilddaten die 3D-Koordinaten aller Selektionspunkte, also aller zu bestimmenden Punkte, ermittelt werden. Dies erfolgt anhand der vorbekannten Relation der Beleuchtungsvorrichtung zur Beleuchtungsquelle, z.B. anhand der bekannten Zuordnungsfunktionen $f_p$.

Im Flussdiagramm sind weiterhin zwei optionale Schritte des Verfahrens gezeigt, die im Rahmen des Verfahrens ebenfalls durchgeführt werden können. In einer ersten Option, die in der Figur mit dem Bezugszeichen 406 gekennzeichnet ist, kann der zeitliche Verlauf der Position einiger oder aller Selektionspunkte verfolgt werden, also der zeitliche Verlauf der vorbestimmten Punkte. Dies ermöglicht eine Vorhersage darüber, wo die Selektionspunkte wahrscheinlich bei Aufnahme des nächsten Bildes angeordnet sein werden. Dies kann bei der Variation des Musters berücksichtigt werden. Somit kann eine Bewegung des Objekts in den nachfolgenden Aufnahmen vorhergesagt werden, um das projizierte Muster entsprechend anzupassen. Diese erste Option 406 ist insbesondere hilfreich bei Anwendungen, bei denen sich ein Objekt auf einem Fließband befindet. Zudem können auch langsame, zumindest im Vergleich zur Bildaufnahmerate langsame Oszillationen ausgeglichen werden, z.B. Schwankungen eines Menschen vor einem Messgerät, dessen Gesicht aufgenommen werden soll. Diese Schwankungen können entweder Ausgleichsbewegungen sein, oder aber Atembewegungen.

Als weitere Option des Verfahrens kann ein Schritt 407 vorgesehen sein, bei dem die Selektionspunkte in der Aufnahme zum Beispiel manuell durch einen Operator ermittelt werden. Ein solcher Operator kann zum Beispiel ein Augenoptiker sein. In einer vollautomatischen Ermittlung aller Selektionspunkte kann somit auch eine manuelle oder ein teilautomatische Auswahl der Selektionspunkte erfolgen. Hierbei kann es sich zum Beispiel um einen einmaligen Vorgang handeln, bei dem der Bediener, also zum Beispiel ein Operator, die vorbestimmten Punkte lediglich in der ersten Aufnahme markiert. Die Suche nach den vorbestimmten Punkten ist dann in den nachfolgenden Aufnahmen computergestützt bzw. softwaregestützt einfacher und robuster durchzuführen, insbesondere durch robuste vorbekannte Methoden der Bildverarbeitung, wie z.B. einem Pattern-Matching oder einem Korrelieren der Bildpunkte miteinander.

Wie in Figur 5A gezeigt, kann für das in Figur 7 gezeigte Verfahren zum Beispiel das erste Muster 200 als ein statisches Startmuster verwendet werden. Das erste Muster 200 weist nur einen einzigen Übergang von Hell zu Dunkel bzw. umgekehrt als Merkmal M1 auf, der in den Bilddaten eindeutig detektiert und einem Abstand von der Bildaufnahmevorrichtung 10 zugeordnet werden kann. Bereits aus diesem einzigen Übergang kann eine Abstandsbestimmung erfolgen, zum Beispiel um die Entfernung des Probanden, also des Benutzers 100, einzuschätzen. Die Abstandsbestimmung kann analog zu einem Lichtschnittverfahren mit einer projizierten Lichtlinie erfolgen. Die Abstandsinformation in der Vertikalen, die durch den vertikal angeordneten Übergang (Merkmal M1) zwischen dem hellen und dunklen Teilbereich des ersten Musters 200 gewonnen wird, kann modell-basiert von dem Messort auf den Ort im zweidimensionalen

EP 3 433 669 B1

Bild übertragen werden, an dem ein Selektionspunkt durch die Bildverarbeitung im Schritt 402 gefunden wurde.

Zur Übertragung der Abstandsinformation vom Messort auf den Selektionspunkt kann in einer ersten Näherung z.B. ein Modell verwendet werden, das als eine Ebene ausgebildet ist, die parallel zur Kameraebene angeordnet ist.

Allgemein kann ein mittlerer Abstand des Objekts 105 im Messbereich ermittelt werden, indem zum Beispiel ein Mittelwert der bestimmten Abstände der vertikalen Linie (Merkmal M1) des ersten Musters 200 im aufgenommenen ersten Bild 300 ermittelt wird. Dies ergibt den mittleren Abstand des Objekts 105 im Messbereich.

Alternativ kann bereits für eine erste Abstandsbestimmung ein 3D-Gesichtsmodell für das Objekt 105 angenommen und/oder verwendet und/oder berücksichtigt werden. Somit kann einem im zweidimensionalen Bild detektierten Selektionspunkt, z.B. einem Punkt im ersten Bild 300, ein analoger bzw. zugeordneter Punkt im dreidimensionalen Gesichtsmodell zugeordnet werden. Eine Differenz bzw. ein Abstand (z.B. in Projektionsrichtung der Bildaufnahmevorrichtung 10, also in Richtung der optischen Achse 11) von diesem detektierten Selektionspunkt zu dem zugeordneten Punkt im dreidimensionalen Gesichtsmodell kann als ein Abstandskorrekturwert verwendet werden, um die Positionierung der Merkmale des Musters besser mit dem Selektionspunkt in Übereinstimmung zu bringen. Bei der Variation des Musters kann somit ein Abstandskorrekturwert berücksichtigt werden, der auf einer Abweichung des detektierten Selektionspunkts von einem zugeordneten Punkt im Gesichtsmodell beruht. Der Abstandskorrekturwert kann in einer Ausführungsform auch aus einem 2D-Abstand des detektierten Selektionspunkts vom zugeordneten Punkt im Gesichtsmodell ermittelt werden, also aus den Bilddaten des aufgenommenen zweidimensionalen Bildes.

Aus dem so bestimmten Abstand, bzw. Modellabstand in 3D, kann zusammen mit den im zweidimensionalen ermittelten Selektionspunkten (vgl. Schritt 402) ein neues Muster berechnet werden, zum Beispiel das in Figur 5B gezeigte zweite Muster 210, und nachfolgend das in Figur 5C gezeigte dritte Muster 220. Hierbei wird ein Muster ausgewählt, bei dem Kanten des Musters durch die Projektion auf die ermittelten Selektionspunkte gelegt werden. Das Muster wird somit so variiert, dass Merkmale des Musters voraussichtlich durch die bislang lediglich im Zweidimensionalen ermittelten Orte der Selektionspunkte verlaufen.

Hierbei kann berücksichtigt werden, dass sich die einzelnen Kontrastkanten des Musters nicht so überlagern, dass keine eindeutige Zuordnung der projizierten Muster zu den einzelnen Merkmalen des Musters mehr möglich ist. Bei der Variation des Musters kann somit berücksichtigt werden, dass eine eindeutige Zuordenbarkeit der Merkmale des projizierten Musters gegeben ist. Dies kann unter Berücksichtigung einer zu erwartenden Abstandsänderung von der Bildaufnahmevorrichtung entlang einer im Bild lateralen Position des Objekts (z.B. Steigung von Nase zu Augenhöhle) und/oder durch ein sukzessive Erhöhung der Anzahl der Merkmale (Kontrastkanten) des Musters erfolgen. So kann z.B. pro Iterationsschritt bei Variation des Musters nur eine einzige vertikale und/oder horizontale Kontrastkante mehr in einem bisher homogenen Teilbereich des Musters angeordnet werden.

Gemäß einer Ausführungsform werden bei Variation des Musters pro homogenen Flächenbereich und/oder Teilbereich maximal eine neue vertikale und/oder horizontale Kontrastkante hinzugefügt. Dies reduziert die Gefahr einer Überlagerung der Merkmale des Musters und somit die Gefahr einer Reduktion der eindeutigen Zuordenbarkeit im aufgenommenen Bild.

Sowie alle zu ermittelnden Selektionspunkte durch jeweils ein Merkmal, insbesondere eine Kante, des Musters in der Projektion der Kamera abgedeckt sind, wie zum Beispiel in Figur 6D gezeigt, kann die Messung abgeschlossen werden. Anschließend können alle 3D-Koordinaten der Selektionspunkte anhand eines einzigen 2D-Bildes berechnet werden (vgl. Schritt 405 und viertes Bild 330).

Gemäß einer Ausführungsform dient das Verfahren zur Ermittlung der 3D-Koordinaten von ein bis fünfzig vorbestimmten Punkten (Selektionspunkten), bevorzugt von fünf bis zwanzig Selektionspunkten, besonders bevorzugt von 10 bis 16 Selektionspunkten.

**Bezugszeichenliste**

| | |
|---|---|
| 10 | Bildaufnahmevorrichtung |
| 11 | optische Achse |
| 20 | Beleuchtungsquelle |
| 21 | Beleuchtungsrichtung |
| 30 | Schnittpunkt |
| | |
| 100 | Benutzer |
| 101 | Brillenfassung |
| 102 | Brillenglasrand/Brillenfassungsrand |
| 105 | Objekt |
| 110 | Brillenglas |

112    rechtes Auge
114    linkes Auge
120    Begrenzung des rechten Auges im Kastenmaß
122    Begrenzung des linken Auges im Kastenmaß

200    erstes Muster
210    zweites Muster
220    drittes Muster
230    viertes Muster
300    erstes Bild
310    zweites Bild
320    drittes Bild
330    viertes Bild

400-407    Verfahrensschritt

A Muster
B Muster
C Muster
LPM linker Pupillenmittelpunkt
RPM rechter Pupillenmittelpunkt
NRF nasaler rechter Fassungspunkt
TRF temporaler rechter Fassungspunkt
NLF nasaler linker Fassungspunkt
TLF temporaler linker Fassungspunkt
ORF oberer rechter Fassungspunkt
URF unterer rechter Fassungspunkt
OLF oberer linker Fassungspunkt
ULF unterer linker Fassungspunkt
HR horizontale Ebene durch den rechten Pupillenmittelpunkt
VR vertikale Ebene durch den rechten Pupillenmittelpunkt
HL horizontale Ebene durch den linken Pupillenmittelpunkt
VL vertikale Ebene durch den linken Pupillenmittelpunkt
R1, R2, R3 Merkmale beim rechten Auge
L1, L2, L3, L4 Merkmale beim linken Auge
M1 Merkmal
M1', M1", M1‴ Merkmalsabschnitt

**Patentansprüche**

1. Verfahren zur Ermittlung von 3D-Koordinaten zumindest eines vorbestimmten Punktes (LPM; RPM; ORF; NRF; URF; TRF; OLF; TLF; ULF; NLF) eines Objekts (105), wobei das Objekt (105) ein Kopf eines Benutzers (100) mit einer daran in Gebrauchsstellung angeordneten Brillenfassung (101) ist und als der zumindest eine vorbestimmte Punkt (LPM; RPM; ORF; NRF; URF; TRF; OLF; TLF; ULF; NLF) ein Punkt des Objekts (105) verwendet wird, der zur Berechnung von optischen Parametern verwendbar ist, und wobei:

a) das Objekt (105) in einem Messbereich angeordnet wird,
b) eine variable Beleuchtungsquelle (20) ein variables Muster (A; B; C; 200; 210; 220; 230) auf das im Messbereich angeordnete Objekt (105) projiziert,
c) eine Bildaufnahmevorrichtung (10), die in vorbekannter Relation zur Beleuchtungsquelle (20) angeordnet ist, ein Bild (300; 310; 320; 330) zumindest eines Teilbereichs des von der variablen Beleuchtungsquelle (20) beleuchteten Objekts (105) aufnimmt,
d) in dem aufgenommenen Bild (300; 310; 320; 330) der zumindest eine vorbestimmte Punkt (LPM; RPM; ORF; NRF; URF; TRF; OLF; TLF; ULF; NLF) detektiert wird,
e) die 3D-Koordinaten des zumindest einen vorbestimmten Punktes (LPM; RPM; ORF; NRF; URF; TRF; OLF; TLF; ULF; NLF) aus dem aufgenommenen Bild (300; 310; 320; 330) unter Berücksichtigung der vorbekannten Relation der Bildaufnahmevorrichtung (10) zur Beleuchtungsquelle (20) bestimmt werden, falls eine Überprüfung des aufgenommenen Bildes (300; 310; 320; 330) ergibt, dass der zumindest eine vorbestimmte Punkt (LPM; RPM; ORF; NRF; URF; TRF; OLF; TLF; ULF; NLF) im aufgenommenen Bild (300; 310; 320; 330) durch ein Merkmal (M1; L1; L2; L3; R1; R2; R3) des variablen Musters (A; B; C; 200; 210; 220; 230) markiert ist, und

f) falls die Überprüfung des aufgenommenen Bildes (300; 310; 320; 330) ergibt, dass der zumindest eine vorbestimmte Punkt (LPM; RPM; ORF; NRF; URF; TRF; OLF; TLF; ULF; NLF) im aufgenommenen Bild (300; 310; 320; 330) nicht durch ein Merkmal (M1; L1; L2; L3; R1; R2; R3) des variablen Musters (A; B; C; 200; 210; 220; 230) markiert ist, das von der Beleuchtungsquelle (20) auf das Objekt (105) projizierte variable Muster (A; B; C; 200; 210; 220; 230) variiert wird und anschließend die Schritte c) bis e) unter Beleuchtung mit dem variierten Muster (A; B; C; 200; 210; 220; 230) wiederholt werden.

2. Verfahren nach Anspruch 1, wobei das von der Beleuchtungsquelle (20) auf das Objekt (105) projizierte variable Muster (A; B; C; 200; 210; 220; 230) so lange variiert und anschließend die Schritte c) bis e) mit dem variierten Muster (A; B; C; 200; 210; 220; 230) wiederholt werden, bis der zumindest eine vorbestimmte Punkt (LPM; RPM; ORF; NRF; URF; TRF; OLF; TLF; ULF; NLF) im aufgenommenen Bild (300; 310; 320; 330) durch ein Merkmal (M1; L1; L2; L3; R1; R2; R3) des variablen Musters (A; B; C; 200; 210; 220; 230) markiert ist und die 3D-Koordinaten des zumindest einen vorbestimmten Punktes (LPM; RPM; ORF; NRF; URF; TRF; OLF; TLF; ULF; NLF) berechnet werden.

3. Verfahren nach Anspruch 1 oder 2, wobei das variable Muster (A; B; C; 200; 210; 220; 230) gezielt so variiert wird, dass das variierte Muster (A; B; C; 200; 210; 220; 230) voraussichtlich den zumindest einen vorbestimmten Punkt (LPM; RPM; ORF; NRF; URF; TRF; OLF; TLF; ULF; NLF) des Objekts (105) mit einem Merkmal (M1; L1; L2; L3; R1; R2; R3) des variierten Musters (A; B; C; 200; 210; 220; 230) markiert.

4. Verfahren nach einem der vorangegangenen Ansprüche, wobei aufeinanderfolgende Bilder (300; 310; 320; 330) mit einer Wiederholfrequenz von zumindest 10 Hz aufgenommen werden, bis die 3D-Koordinaten des zumindest einen vorbestimmten Punktes (LPM; RPM; ORF; NRF; URF; TRF; OLF; TLF; ULF; NLF) berechnet werden.

5. Verfahren nach einem der vorangegangen Ansprüche, wobei das variable Muster (A; B; C; 200; 210; 220; 230) zumindest eine im Wesentlichen horizontale und/oder vertikale Kontrastkante als Merkmal (M1; L1; L2; L3; R1; R2; R3) aufweist, die bei Variation des Musters (A; B; C; 200; 210; 220; 230) verschoben wird.

6. Verfahren nach einem der vorangegangen Ansprüche, wobei das variable Muster (A; B; C; 200; 210; 220; 230) eine Anzahl geometrischer Formen mit Kontrastkanten als Merkmale (M1; L1; L2; L3; R1; R2; R3) aufweist, und bei Variation des Musters (A; B; C; 200; 210; 220; 230) die Anzahl der geometrischen Formen und somit die Anzahl der Kontrastkanten des Musters (A; B; C; 200; 210; 220; 230) erhöht wird.

7. Verfahren nach einem der vorangegangenen Anspruch 8, wobei als der zumindest eine vorbestimmte Punkt (LPM; RPM; ORF; NRF; URF; TRF; OLF; TLF; ULF; NLF) zumindest einer der folgenden Punkte verwendet wird:

- ein Pupillenmittelpunkt (LPM; RPM),
- ein innerer temporaler Fassungspunkt (TRF; TLF),
- ein innerer nasaler Fassungspunkt (NRF; NLF),
- ein innerer Fassungspunkt oberhalb der Pupille (ORF; OLF) und/oder
- ein innerer Fassungspunkt unterhalb der Pupille (URF; ULF).

8. Verfahren nach einem der vorangegangenen Ansprüche, wobei aus den bestimmten 3D-Koordinaten des zumindest einen vorbestimmten Punktes (LPM; RPM; ORF; NRF; URF; TRF; OLF; TLF; ULF; NLF) optische Parameter des Benutzers (100) bestimmt werden.

9. Verfahren nach einem der vorangegangenen Ansprüche, wobei die 3D-Koordinaten eines Pupillenmittelpunkts (LPM; RPM) des Benutzers (100) ermittelt werden, indem zumindest zwei zum Pupillenmittelpunkt (LPM; RPM) benachbarte Punkte als vorbestimmte Punkte mit jeweils zumindest einem Merkmal (L1; L2; L3; R1; R2; R3) des variablen Musters (A; B; C; 200; 210; 220; 230) markiert werden, aus deren 3D-Koordinaten die 3D-Koordinaten des Pupillenmittelpunkts (LPM; RPM) abgeschätzt werden.

10. Vorrichtung zur Ermittlung von 3D-Koordinaten zumindest eines vorbestimmten Punktes (LPM; RPM; ORF; NRF; URF; TRF; OLF; TLF; ULF; NLF) eines Objekts (105), wobei das Objekt (105) ein Kopf eines Benutzers (100) mit einer daran in Gebrauchsstellung angeordneten Brillenfassung (101) ist und der zumindest eine vorbestimmte Punkt (LPM; RPM; ORF; NRF; URF; TRF; OLF; TLF; ULF; NLF) ein Punkt des Objekts (105) ist, der zur Berechnung von optischen Parametern verwendbar ist, mit:

- einer variablen Beleuchtungsquelle (20) zum Projizieren eines variablen Musters (A; B; C; 200; 210; 220; 230) auf das in einem Messbereich angeordnete Objekt (105),
- einer Bildaufnahmevorrichtung (10), die in vorbekannter Relation zur Beleuchtungsquelle (20) angeordnet ist, zum Aufnehmen eines Bildes (300; 310; 320; 330) von zumindest einem Teilbereich des von der variablen Beleuchtungsquelle (20) beleuchteten Objekts (105),
- einem Detektionsmodul zum Detektieren des zumindest einen vorbestimmten Punktes (LPM; RPM; ORF; NRF; URF; TRF; OLF; TLF; ULF; NLF) in dem aufgenommenen Bild (300; 310; 320; 330), - einem Koordinatenbestimmungsmodul zum Bestimmen der 3D-Koordinaten des zumindest einen vorbestimmten Punktes (LPM; RPM; ORF; NRF; URF; TRF; OLF; TLF; ULF; NLF) aus dem aufgenommenen Bild (300; 310; 320; 330) unter Berücksichtigung der vorbekannten Relation der Bildaufnahmevorrichtung (10) zur Beleuchtungsquelle (20), falls eine Überprüfung des aufgenommenen Bildes (300; 310; 320; 330) ergibt, dass der zumindest eine vorbestimmte Punkt (LPM; RPM; ORF; NRF; URF; TRF; OLF; TLF; ULF; NLF) im aufgenommenen Bild (300; 310; 320; 330) durch ein Merkmal (M1; L1; L2; L3; R1; R2; R3) des variablen Musters (A; B; C; 200; 210; 220; 230) markiert ist, und
- einem Mustervariationsmodul, das, falls die Überprüfung des aufgenommenen Bildes (300; 310; 320; 330) ergibt, dass der zumindest eine vorbestimmte Punkt (LPM; RPM; ORF; NRF; URF; TRF; OLF; TLF; ULF; NLF) im aufgenommenen Bild (300; 310; 320; 330) nicht durch ein Merkmal (M1; L1; L2; L3; R1; R2; R3) des variablen Musters (A; B; C; 200; 210; 220; 230) markiert ist, das von der Beleuchtungsquelle (20) auf das Objekt (105) projizierte variable Muster (A; B; C; 200; 210; 220; 230) variiert.

11. Vorrichtung nach Anspruch 10, mit einer Parameterbestimmungseinrichtung, welche ausgelegt ist, aus den bestimmten 3D-Koordinaten optische Parameter eines Benutzers (100) zu bestimmen.

12. Computerprogrammprodukt umfassend Programmteile, welche, wenn geladen in einen Computer, zur Durchführung und/oder Steuerung eines Verfahrens nach einem der Ansprüche 1 bis 9 ausgelegt sind.

**Claims**

1. Method for determining 3D coordinates of at least one predetermined point (LPM; RPM; ORF; NRF; URF; TRF; OLF; TLF; ULF; NLF) of an object (105), wherein the object (105) is a head of a user (100) with a spectacle frame (101) arranged thereon in a position of use, and wherein a point of the object (105) which is suitable for calculating optical parameters is used as the at least one predetermined point (LPM; RPM; ORF; NRF; URF; TRF; OLF; TLF; ULF; NLF) is used as the at least one predetermined point (LPM; RPM; ORF; NRF; URF; TRF; OLF; TLF; ULF; NLF) of the object (105) that is usable for calculating optical parameters, and wherein:

a) the object (105) is arranged in a measuring range,
b) a variable light source (20) projects a variable pattern (A; B; C; 200; 210; 220; 230) onto the object (105) arranged in the measuring range,
c) an image recording device (10), which is arranged in a known relationship with the illumination source (20), records an image (300; 310; 320; 330) of at least a partial area of the object (105) illuminated by the variable illumination source (20),
d) in the recorded image (300; 310; 320; 330), at least one predetermined point (LPM; RPM; ORF; NRF; URF; TRF; OLF; TLF; ULF; NLF) is detected,
e) the 3D coordinates of the at least one predetermined point (LPM; RPM; ORF; NRF; URF; TRF; OLF; TLF; ULF; NLF) from the recorded image (300; 310; 320; 330) taking into account the known relationship between the image recording device (10) and the light source (20), if a check of the recorded image (300; 310; 320; 330) shows that the at least one predetermined point (LPM; RPM; ORF; NRF; URF; TRF; OLF; TLF; ULF; NLF) in the recorded image (300; 310; 320; 330) is marked by a feature (M1; L1; L2; L3; R1; R2; R3) of the variable pattern (A; B; C; 200; 210; 220; 230), and
f) if the check of the recorded image (300; 310; 320; 330) reveals that the at least one predetermined point (LPM; RPM; ORF; NRF; URF; TRF; OLF; TLF; ULF; NLF) in the recorded image (300; 310; 320; 330) is not marked by a feature (M1; L1; L2; L3; R1; R2; R3) of the variable pattern (A; B; C; 200; 210; 220; 230) that is not marked by a feature (M1; L1; L2; L3; R1; R2; R3) of the variable pattern (A; B; C; 200; 210; 220; 230) projected by the illumination source (20) onto the object (105) is varied and then steps c) to e) are repeated under illumination with the varied pattern (A; B; C; 200; 210; 220; 230).

2. Method according to claim 1, wherein the variable pattern (A; B; C; 200; 210; 220; 230) projected by the illumination source (20) onto the object (105) is varied and then steps c) to e) are repeated with the varied pattern (A; B; C; 200; 210; 220; 230) until the at least one predetermined point (LPM; RPM; ORF; NRF; URF; TRF; OLF; TLF; ULF; NLF) in the recorded image (300; 310; 320; 330) is marked by a feature (M1; L1; L2; L3; R1; R2; R3) of the variable pattern (A; B; C; 200; 210; 220; 230) and the 3D coordinates of the at least one predetermined point (LPM; RPM; ORF; NRF; URF; TRF; OLF; TLF; ULF; NLF) are calculated.

3. Method according to claim 1 or 2, wherein the variable pattern (A; B; C; 200; 210; 220; 230) is specifically varied such that the varied pattern (A; B; C; 200; 210; 220; 230) is expected to correspond to the at least one predetermined point (LPM; RPM; ORF; NRF; URF; TRF; OLF; TLF; ULF; NLF) of the object (105) with a feature (M1; L1; L2; L3; R1; R2; R3) of the varied pattern (A; B; C; 200; 210; 220; 230).

4. Method according to one of the preceding claims, wherein successive images (300; 310; 320; 330) are recorded at a repetition frequency of at least 10 Hz until the 3D coordinates of the at least one predetermined point (LPM; RPM; ORF; NRF; URF; TRF; OLF; TLF; ULF; NLF) are calculated.

5. Method according to one of the preceding claims, wherein the variable pattern (A; B; C; 200; 210; 220; 230) has at least one substantially horizontal and/or vertical contrast edge as a feature (M1; L1; L2; L3; R1; R2; R3) which is displaced when the pattern (A; B; C; 200; 210; 220; 230) varies.

6. Method according to one of the preceding claims, wherein the variable pattern (A; B; C; 200; 210; 220; 230) has a number of geometric shapes with contrast edges as features (M1; L1; L2; L3; R1; R2; R3) and, when the pattern (A; B; C; 200; 210; 220; 230) is varied, the number of geometric shapes and thus the number of contrasting edges of the pattern (A; B; C; 200; 210; 220; 230) is increased.

7. Method according to one of the preceding claims 8, wherein at least one of the following points is used as the at least one predetermined point (LPM; RPM; ORF; NRF; URF; TRF; OLF; TLF; ULF; NLF):

   - a pupil center (LPM; RPM),
   - an inner temporal frame point (TRF; TLF),
   - an inner nasal frame reference (NLF),
   - an inner reference point above the pupil (ORF; OLF) and/or
   - an inner frame reference point below the pupil (URF; ULF).

8. Method according to one of the preceding claims, wherein optical parameters of the user (100) are determined from the determined 3D coordinates of the at least one predetermined point (LPM; RPM; ORF; NRF; URF; TRF; OLF; TLF; ULF; NLF).

9. Method according to one of the preceding claims, wherein the 3D coordinates of a pupil center (LPM; RPM) of the user (100) are determined by marking at least two points adjacent to the pupil center (LPM; RPM) as predetermined points, each with at least one feature (L1; L2; L3; R1; R2; R3) of the variable pattern (A; B; C; 200; 210; 220; 230) are marked as predetermined points, from whose 3D coordinates the 3D coordinates of the pupil center (LPM; RPM) are estimated.

10. Device for determining 3D coordinates of at least one predetermined point (LPM; RPM; ORF; NRF; URF; TRF; OLF; TLF; ULF; NLF) of an object (105), wherein the object (105) is a head of a user (100) with a spectacle frame (101) arranged thereon in a position of use, and the at least one predetermined point (LPM; RPM; ORF; NRF; URF; TRF; OLF; TLF; ULF; NLF) is a point of the object ( ) that can be used to calculate optical parameters, comprising:

   - a variable light source (20) for projecting a variable pattern (A; B; C; 200; 210; 220; 230) onto the object (105) arranged in a measuring range,
   - an image recording device (10) arranged in a known relationship with the illumination source (20) for recording an image (300; 310; 320; 330) of at least a partial area of the object (105) illuminated by the variable illumination source (20),
   - a detection module for detecting the at least one predetermined point (LPM; RPM; ORF; NRF; URF; TRF; OLF; TLF; ULF; NLF) in the recorded image (300; 310; 320; 330), - a coordinate determination module for determining the 3D coordinates of the at least one predetermined point (LPM; RPM; ORF; NRF; URF; TRF; OLF; TLF; ULF; NLF) from the recorded image (300; 310; 320; 330) taking into account the known relationship between the image recording device (10) and the light source (20), if a check of the recorded image (300; 310; 320; 330) shows that the at least one predetermined point (LPM; RPM; ORF; NRF; URF; TRF; OLF; TLF; ULF; NLF) in the captured image (300; 310; 320; 330) is marked by a feature (M1; L1; L2; L3; R1; R2; R3) of the variable pattern (A; B; C; 200; 210; 220; 230), and

- a pattern variation module which, if the check of the recorded image (300; 310; 320; 330) reveals that the at least one predetermined point (LPM; RPM; ORF; NRF; URF; TRF; OLF; TLF; ULF; NLF) in the recorded image (300; 310; 320; 330) is not marked by a feature (M1; L1; L2; L3; R1; R2; R3) of the variable pattern (A; B; C; 200; 210; 220; 230) that varies the variable pattern (A; B; C; 200; 210; 220; 230) projected by the illumination source (20) onto the object (105).

**11.** Device according to claim 10, with a parameter determination device which is designed to determine optical parameters of a user (100) from the determined 3D coordinates.

**12.** Computer program product comprising program parts which, when loaded into a computer, are designed to carry out and/or control a method according to any one of claims 1 to 9.

**Revendications**

**1.** Procédé pour déterminer des coordonnées 3D d'au moins un point prédéterminé (LPM ; RPM ; ORF ; NRF ; URF ; TRF ; OLF ; TLF ; ULF ; NLF) d'un objet (105), dans lequel l'objet (105) est une tête d'un utilisateur (100) avec une monture de lunettes (101) disposée sur celle-ci en position d'utilisation et, en tant que ledit au moins un point prédéterminé (LPM ; RPM ; ORF ; NRF ; URF ; TRF ; OLF ; TLF ; ULF ; NLF) est utilisé un point de l'objet (105) qui est utilisable pour le calcul de paramètres optiques, et dans lequel :

a) l'objet (105) est placé dans une zone de mesure,
b) une source d'éclairage variable (20) projette un motif variable (A ; B ; C ; 200 ; 210 ; 220 ; 230) sur l'objet (105) placé dans la zone de mesure,
c) un dispositif de prise de vue (10), qui est disposé dans une relation connue au préalable avec la source d'éclairage (20), prend une image (300 ; 310 ; 320 ; 330) d'au moins une zone partielle de l'objet (105) éclairé par la source d'éclairage variable (20),
d) dans l'image capturée (300 ; 310 ; 320 ; 330), le au moins un point prédéterminé (LPM ; RPM ; ORF ; NRF ; URF ; TRF ; OLF ; TLF ; ULF ; NLF) est détecté,
e) les coordonnées 3D du au moins un point prédéterminé (LPM ; RPM ; ORF ; NRF ; URF ; TRF ; OLF ; TLF ; ULF ; NLF) sont déterminées à partir de l'image enregistrée (300 ; 310 ; 320 ; 330) en tenant compte de la relation connue au préalable du dispositif d'enregistrement d'image (10) par rapport à la source d'éclairage (20), si un contrôle de l'image enregistrée (300 ; 310 ; 320 ; 330) montre que le au moins un point prédéterminé (LPM ; RPM ; ORF ; NRF ; URF ; TRF ; OLF ; TLF ; ULF ; NLF) dans l'image capturée (300 ; 310 ; 320 ; 330) est marqué par une caractéristique (M1 ; L1 ; L2 ; L3 ; R1 ; R2 ; R3) du motif variable (A ; B ; C ; 200 ; 210 ; 220 ; 230), et
f) si l'examen de l'image capturée (300 ; 310 ; 320 ; 330) révèle que le au moins un point prédéterminé (LPM ; RPM ; ORF ; NRF ; URF ; TRF ; OLF ; TLF ; ULF ; NLF) dans l'image capturée (300 ; 310 ; 320 ; 330) n'est pas marqué par une caractéristique (M1 ; L1 ; L2 ; L3 ; R1 ; R2 ; R3) du motif variable (A ; B ; C ; 200 ; 210 ; 220 ; 230) est marqué, le motif variable (A ; B ; C ; 200 ; 210 ; 220 ; 230) projeté par la source d'éclairage (20) sur l'objet (105) est modifié, puis les étapes c) à e) sont répétées sous éclairage avec le motif modifié (A ; B ; C ; 200 ; 210 ; 220 ; 230).

**2.** Procédé selon la revendication 1, dans lequel on fait varier le motif variable (A ; B ; C ; 200 ; 210 ; 220 ; 230) projeté par la source d'éclairage (20) sur l'objet (105), puis on répète les étapes c) à e) avec le motif varié (A ; B ; C ; 200 ; 210 ; 220 ; 230) jusqu'à ce que le au moins un point prédéterminé (LPM ; RPM ; ORF ; NRF ; URF ; TRF ; OLF ; TLF ; ULF ; NLF) dans l'image capturée (300 ; 310 ; 320 ; 330) par une caractéristique (M1 ; L1 ; L2 ; L3 ; R1 ; R2 ; R3) du motif variable (A ; B ; C ; 200 ; 210 ; 220 ; 230) est marquée et les coordonnées 3D dudit au moins un point prédéterminé (LPM ; RPM ; ORF ; NRF ; URF ; TRF ; OLF ; TLF ; ULF ; NLF) sont calculées.

**3.** Procédé selon la revendication 1 ou 2, dans lequel le motif variable (A ; B ; C ; 200 ; 210 ; 220 ; 230) est varié de manière ciblée de telle sorte que le motif varié (A ; B ; C ; 200 ; 210 ; 220 ; 230) est susceptible d'atteindre le au moins un point prédéterminé (LPM ; RPM ; ORF ; NRF ; URF ; TRF ; OLF ; TLF ; ULF ; NLF) de l'objet (105) est marqué par une caractéristique (M1 ; L1 ; L2 ; L3 ; R1 ; R2 ; R3) du motif varié (A ; B ; C ; 200 ; 210 ; 220 ; 230).

**4.** Procédé selon l'une quelconque des revendications précédentes, dans lequel des images successives (300 ; 310 ;

320 ; 330) sont prises à une fréquence de répétition d'au moins 10 Hz jusqu'à ce que les coordonnées 3D dudit au moins un point prédéterminé (LPM ; RPM ; ORF ; NRF ; URF ; TRF ; OLF ; TLF ; ULF ; NLF) soient calculées.

5. Procédé selon l'une quelconque des revendications précédentes, dans lequel le motif variable (A ; B ; C ; 200 ; 210 ; 220 ; 230) comprend au moins un bord de contraste sensiblement horizontal et/ou vertical en tant que caractéristique (M1 ; L1 ; L2 ; L3 ; R1 ; R2 ; R3) qui est déplacé lorsque le motif (A ; B ; C ; 200 ; 210 ; 220 ; 230) varie.

6. Procédé selon l'une quelconque des revendications précédentes, dans lequel le motif variable (A ; B ; C ; 200 ; 210 ; 220 ; 230) comprend un certain nombre de formes géométriques avec des arêtes de contraste en tant que caractéristiques (M1 ; L1 ; L2 ; L3 ; R1 ; R2 ; R3), et lorsque le motif (A ; B ; C ; 200 ; 210 ; 220 ; 230) varie, le nombre de formes géométriques et donc le nombre d'arêtes de contraste du motif (A ; B ; C ; 200 ; 210 ; 220 ; 230) est augmenté.

7. Procédé selon l'une quelconque des revendications précédentes 8, dans lequel on utilise comme ledit au moins un point prédéterminé (LPM ; RPM ; ORF ; NRF ; URF ; TRF ; OLF ; TLF ; ULF ; NLF) au moins l'un des points suivants :

   - un point central de la pupille (LPM ; RPM),
   - un point de monture temporelle interne (TRF ; TLF),
   - un point de captage nasal interne (NRF ; NLF),
   - un point de captage interne au-dessus de la pupille (ORF ; OLF) et/ou
   - un point de captage interne en dessous de la pupille (URF ; ULF).

8. Procédé selon l'une des revendications précédentes, dans lequel des paramètres optiques de l'utilisateur (100) sont déterminés à partir des coordonnées 3D déterminées du au moins un point prédéterminé (LPM ; RPM ; ORF ; NRF ; URF ; TRF ; OLF ; TLF ; ULF ; NLF).

9. Procédé selon l'une des revendications précédentes, dans lequel les coordonnées 3D d'un point central de la pupille (LPM ; RPM) de l'utilisateur (100) sont déterminées en utilisant au moins deux points centraux de la pupille (LPM ; RPM) sont marqués en tant que points prédéterminés ayant chacun au moins une caractéristique (L1 ; L2 ; L3 ; R1 ; R2 ; R3) du motif variable (A ; B ; C ; 200 ; 210 ; 220 ; 230), à partir des coordonnées 3D desquelles les coordonnées 3D du point central de la pupille (LPM ; RPM) sont estimées.

10. Dispositif pour déterminer des coordonnées 3D d'au moins un point prédéterminé (LPM ; RPM ; ORF ; NRF ; URF ; TRF ; OLF ; TLF ; ULF ; NLF) d'un objet (105), l'objet (105) étant une tête d'un utilisateur (100) avec une monture de lunettes (101) disposée sur celle-ci en position d'utilisation et le au moins un point prédéterminé (LPM ; RPM ; ORF ; NRF ; URF ; TRF ; OLF ; TLF ; ULF ; NLF) est un point de l'objet (105) qui est utilisable pour le calcul de paramètres optiques, avec :

   - une source d'éclairage variable (20) pour projeter un motif variable (A ; B ; C ; 200 ; 210 ; 220 ; 230) sur l'objet (105) disposé dans une zone de mesure,
   - un dispositif de prise de vue (10), qui est disposé dans une relation connue à l'avance par rapport à la source d'éclairage (20), pour prendre une image (300 ; 310 ; 320 ; 330) d'au moins une zone partielle de l'objet (105) éclairé par la source d'éclairage variable (20),
   - un module de détection pour détecter ledit au moins un point prédéterminé (LPM ; RPM ; ORF ; NRF ; URF ; TRF ; OLF ; TLF ; ULF ; NLF) dans l'image capturée (300 ; 310 ; 320 ; 330), - un module d'analyse pour analyser l'image capturée (300 ; 310 ; 320 ; 330). un module de détermination de coordonnées pour déterminer les coordonnées 3D du au moins un point prédéterminé (LPM ; RPM ; ORF ; NRF ; URF ; TRF ; OLF ; TLF ; ULF ; NLF) à partir de l'image capturée (300 ; 310 ; 320 ; 330) en tenant compte de la relation connue au préalable du dispositif de capture d'image (10) avec la source d'éclairage (20), si un examen de l'image capturée (300 ; 310 ; 320 ; 330) montre que le au moins un point prédéterminé (LPM ; RPM ; ORF ; NRF ; URF ; TRF ; OLF ; TLF ; ULF ; NLF) dans l'image capturée (300 ; 310 ; 320 ; 330) est marqué par une caractéristique (M1 ; L1 ; L2 ; L3 ; R1 ; R2 ; R3) du motif variable (A ; B ; C ; 200 ; 210 ; 220 ; 230), et
   - un module de variation de motif qui, si l'examen de l'image capturée (300 ; 310 ; 320 ; 330) révèle que le au moins un point prédéterminé (LPM ; RPM ; ORF ; NRF ; URF ; TRF ; OLF ; TLF ; ULF ; NLF) dans l'image capturée (300 ; 310 ; 320 ; 330) n'est pas marquée par une caractéristique (M1 ; L1 ; L2 ; L3 ; R1 ; R2 ; R3) du motif variable (A ; B ; C ; 200 ; 210 ; 220 ; 230) qui varie le motif variable (A ; B ; C ; 200 ; 210 ; 220 ; 230) projeté par la source d'éclairage (20) sur l'objet (105).

**11.** Dispositif selon la revendication 10, comprenant un dispositif de détermination de paramètres qui est conçu pour déterminer des paramètres optiques d'un utilisateur (100) à partir des coordonnées 3D déterminées.

**12.** Produit programme d'ordinateur comprenant des parties de programme qui, lorsqu'elles sont chargées dans un ordinateur, sont conçues pour exécuter et/ou commander un procédé selon l'une des revendications 1 à 9..

Fig. 1A

Fig. 1B

Fig. 2

Fig. 3A                    Fig. 3B                    Fig. 3C

Fig. 4

Fig. 5A

Fig. 6A

Fig. 5B

Fig. 6B

Fig. 5C

Fig. 6C

Fig. 5D

Fig. 6D

**Fig. 7**

**IN DER BESCHREIBUNG AUFGEFÜHRTE DOKUMENTE**

**In der Beschreibung aufgeführte Patentdokumente**

- DE 102005003699 A1
- US 20150204663 A1
- US 20120133954 A1

**In der Beschreibung aufgeführte Nicht-Patentliteratur**

- **DR. ROLAND ENDERS**. Die Optik des Auges und der Sehhilfen. Optische Fachveröffentlichung GmbH, 1995
- **HEINZ DIEPES** ; **RALF BLENDOWSKI**. Optik und Technik der Brille. Verlag Optische Fachveröffentlichungen GmbH, 2002
- **J. GENG**. *Structured-light 3D surface imaging: a tutoria*